# EUROPEAN PATENT APPLICATION

(11) **EP 4 523 590 A1**
(43) Date of publication of application: **19.03.2025**
(21) Application number: 23802959.9
(22) Date of filing: 10.05.2023
(51) Int. Cl.: A47L 11/24, G05D 1/02

(54) **CLEANING METHOD, CLEANING APPARATUS, CLEANING DEVICE, AND STORAGE MEDIUM**

(30) Priority: 10.05.2022 CN 202210504138; 30.05.2022 CN 202210597028; 31.05.2022 CN 202210608104; 31.05.2022 CN 202210613623
(71) Applicant: Midea Robozone Technology Co., Ltd., Suzhou, Jiangsu 215000 (CN)
(72) Inventor: SUN, Tao, Suzhou, Jiangsu 215000 (CN); SHAO, Lin, Suzhou, Jiangsu 215000 (CN); HU, Zetian, Suzhou, Jiangsu 215000 (CN); XU, Xiao, Suzhou, Jiangsu 215000 (CN); LI, Jianhua, Suzhou, Jiangsu 215000 (CN)
(74) Representative: RGTH
(86) International application number: PCT/CN2023/093307
(87) International publication number: WO 2023/217190

(57) **Abstract**

A cleaning method includes: (01) determining a target cleaning region, (02) generating a cleaning trajectory in the target cleaning region in response to a path planning instruction, and (03) performing a cleaning action along the cleaning trajectory. The present disclosure also discloses a cleaning apparatus, a cleaning device, and a storage medium.

## Description

### CROSS-REFERENCE TO RELATED APPLICATIONS

This application claims priorities to Chinese Patent Application No. 202210504138.X, No. 202210597028.2, No. 202210613623.0, and No. 202210608104.5, filed on May 10, 2022, filed on May 30, 2022, and filed on May 31, 2022, respectively, the entire disclosure of which are incorporated herein by reference.

### FIELD

The present disclosure relates to the technical field of cleaning, in particular to a cleaning method and apparatus, a cleaning device, and a storage medium.

### BACKGROUND

With the advent of the intelligent era, various intelligent devices have brought great convenience to people. Smart cleaning devices may reduce people's housework burden. However, a cleaning strategy of a current cleaning device is still difficult to achieve high whole-house cleaning coverage. There are still unsatisfactory cases of cleaning effects occurring in many aspects such as map construction, path planning, cleaning parameter settings, and dynamic scenes. For example, in dynamic scenes, such as scenes of people walking, pets moving, opening and closing of doors, and furniture movement, the cleaning device fails to identify dynamic obstacles, and misses occur in sweeping.

### SUMMARY

Implementations of the present disclosure provide a cleaning method, a cleaning apparatus, a cleaning device, and a storage medium.

A cleaning method according to the implementations of the present disclosure is applied in a cleaning device. The cleaning method comprises: determining a target cleaning region; generating a cleaning trajectory in the target cleaning region in response to a path planning instruction; and performing a cleaning action along the cleaning trajectory.

In some implementations, said determining the target cleaning region comprises: determining a target cleaning region of the cleaning device in response to identifying that the cleaning device is activated at a non-charging position.

In some implementations, said determining the target cleaning region of the cleaning device comprises: identifying whether a first cleaning target exists in a region having a predetermined distance from the cleaning device, and determining a region where the first cleaning target is located as the target cleaning region in response to the first cleaning target existing in the region having the predetermined distance from the cleaning device.

In some implementations, said determining the target cleaning region of the cleaning device comprises: obtaining a semantic map of all scenes established by the cleaning device; and determining the target cleaning region based on the semantic map.

In some implementations, said determining the target cleaning region based on the semantic map comprises: determining, in response to determining that the cleaning device is in a predetermined type of room based on the semantic map, the predetermined type of room as the target cleaning region.

In some implementations, said determining the target cleaning region based on the semantic map comprises: determining, in response to determining that the cleaning device is not in a predetermined type of room and that a second cleaning target exists in a region having a predetermined distance from the cleaning device based on the semantic map, a region where the second cleaning target is located as the target cleaning region.

In some implementations, said determining the target cleaning region based on the semantic map comprises: determining, in response to determining that the cleaning device is not in a predetermined type of room and that no second cleaning target exists in a region having a predetermined distance from the cleaning device based on the semantic map, the region having the predetermined distance from the cleaning device as the target cleaning region.

In some implementations, the cleaning method further comprises, prior to determining the target cleaning region based on the semantic map: identifying whether a first cleaning target exists in a region having a predetermined distance from the cleaning device, and determining to perform the step of determining the target cleaning region based on the semantic map in response to the first cleaning target not existing in the region having the predetermined distance from the cleaning device.

In some implementations, said performing the cleaning action along the cleaning trajectory comprises: cleaning the target cleaning region by using a cleaning scheme of cleaning first along an edge and then in a zigzag manner, and returning to a charging position for charging upon completion.

In some implementations, the cleaning method further comprises, prior to performing the cleaning action along the cleaning trajectory: prompting a cleaning scheme of the cleaning device on the target cleaning region via voice.

In some implementations, the first cleaning target comprises any one of a stain, small granular garbage, or flocculent garbage.

In some implementations, the second cleaning target is a household appliance or furniture.

In some implementations, said generating the cleaning trajectory in the target cleaning region in response to the path planning instruction comprises: determining a current cleaning state of a mopping rag, and a start point and an end point that correspond to the path planning instruction in response to the path planning instruction; and determining a cleaning trajectory from the start point to the end point based on a geographical live map, a cleaning live map, and the cleaning state.

In some implementations, said determining the current cleaning state of the mopping rag comprises: determining that the current cleaning state of the mopping rag is clean in response to a current cleaning stage of the cleaning device being a departure stage after self-cleaning at a water station; and determining that the current cleaning state of the mopping rag is dirty in response to the current cleaning stage of the cleaning device being a stage from a currently cleaned region to a to-be-cleaned region or a stage of returning to the water station for cleaning the mopping rag.

In some implementations, said determining the cleaning trajectory from the start point to the end point based on the geographical live map, the cleaning live map, and the cleaning state comprises: determining a region free of obstacles based on the geographical live map; and determining the cleaning trajectory from the start point to the end point based on the region free of obstacles and the cleaning live map in accordance with a predetermined passing strategy corresponding to the cleaning state.

In some implementations, said determining the cleaning trajectory from the start point to the end point based on the region free of obstacles and the cleaning live map in accordance with the predetermined passing strategy corresponding to the cleaning state comprises: determining a currently cleaned region from the cleaning live map in response to the cleaning state being clean; determining all cleaned and free of obstacles regions between the start point and the end point based on the region free of obstacles and the currently cleaned region; and determining at least one continuous movement trajectory formed between the start point, all the cleaned and free of obstacles regions, and the end point, and determining a shortest movement trajectory from the at least one movement trajectory as the cleaning trajectory from the start point to the end point.

In some implementations, said determining the cleaning trajectory from the start point to the end point based on the region free of obstacles and the cleaning live map in accordance with the predetermined passing strategy corresponding to the cleaning state comprises: determining all to-be-cleaned regions from the cleaning live map in response to the cleaning state being dirty; determining all to-be-cleaned and free of obstacles regions between the start point and the end point based on the region free of obstacles and all the to-be-cleaned regions; and determining at least one continuous movement trajectory formed between the start point, all the to-be-cleaned and free of obstacles regions, and the end point, and determining a shortest movement trajectory from the at least one movement trajectory as the cleaning trajectory from the start point to the end point.

In some implementations, the cleaning method further comprises: determining that no continuous movement trajectory is formed, and determining the cleaning trajectory from the start point to the end point based on the region free of obstacles.

In some implementations, the cleaning method further comprises, prior to in response to the path planning instruction: dividing the target cleaning region into a plurality of regions, and determining a cleaning sequence of the plurality of regions.

In some implementations, said determining the start point and the end point that correspond to the path planning instruction comprises: determining the start point and the end point that correspond to the path planning instruction based on a current cleaning stage of the cleaning device and the cleaning sequence of the plurality of regions.

In some implementations, the cleaning method further comprises: marking an obstacle in the target cleaning region, and performing the cleaning action with avoiding the obstacle in the target cleaning region; detecting a state of the obstacle in the target cleaning region, and determining an obstacle with a changed state; and performing the cleaning action at a position of the obstacle with the changed state.

In some implementations, said marking the obstacle in the target cleaning region comprises: marking a position, a type, and a shape of the obstacle in the target cleaning region, the type comprising a dynamic obstacle.

In some implementations, said detecting the state of the obstacle in the target cleaning region, and determining the obstacle with the changed state comprises: detecting a position and a shape of the dynamic obstacle in the target cleaning region; and determining a dynamic obstacle with a changed state based on the dynamic obstacle having a changed position or a changed shape.

In some implementations, the cleaning action comprises a first cleaning action and a second cleaning action. A first cleaning trajectory determined by performing the first cleaning action is a closed loop, and a second cleaning trajectory determined by performing the second cleaning action is capable of filling the target cleaning region.

In some implementations, said determining the target cleaning region comprises: performing the first cleaning action, and determining the target cleaning region based on a cleaning trajectory of the first cleaning action.

In some implementations, said performing the cleaning action with avoiding the obstacle in the target cleaning region comprises: performing the second cleaning action in the target cleaning region; and determining that the obstacle is encountered, performing the first cleaning action with avoiding the obstacle and then continuing to perform the second cleaning action.

In some implementations, said performing the cleaning action along the cleaning trajectory comprises: monitoring a dust intake amount of a dust collection box in the cleaning device; determining a target operation mode of the cleaning device based on a relation between the dust intake amount and a predetermined dust amount threshold, the target operation mode being used to change a cleaning strength and a cleaning region of the cleaning device; and driving the cleaning device to operate in the target operation mode for performing the cleaning action.

In some implementations, said determining the target operation mode of the cleaning device based on the relation between the dust intake amount and the predetermined dust amount threshold comprises: in response to detecting that the dust intake amount is greater than the predetermined dust amount threshold, determining the target operation mode for controlling the cleaning device to perform a cleaning function with a first cleaning strength and a first cleaning area; or in response to detecting that the dust intake amount is smaller than or equal to the predetermined dust amount threshold, determining the target operation mode for controlling the cleaning device to perform the cleaning function with a second cleaning strength and a second cleaning area. The second cleaning strength is lower than the first cleaning strength, and the second cleaning area is smaller than the first cleaning area.

In some implementations, said in response to detecting that the dust intake amount is greater than the predetermined dust amount threshold, determining the target operation mode for controlling the cleaning device to perform the cleaning function with the first cleaning strength and the first cleaning area further comprises: determining that the dust intake amount is greater than the predetermined dust amount threshold, and recording a position where the cleaning device is located; and marking a region within a predetermined range from the position as a high cleaning region, and controlling the cleaning device to perform the cleaning function with the first cleaning strength and the first cleaning area in the high cleaning region.

In some implementations, said driving the cleaning device to operate in the target operation mode comprises: determining at least one of a rotational speed of a dust absorption motor, a traveling interval, a cleaning area, and a number of repeated cleaning times that are represented by the target operation mode; and driving the cleaning device to perform a cleaning function with the at least one of the rotational speed of the dust absorption motor, the traveling interval, the cleaning area, and the number of repeated cleaning times. The traveling interval reflects a distance between two adjacent traveling routes of the cleaning device.

In some implementations, said driving the cleaning device to perform the cleaning function with the traveling interval comprises: determining an initial interval between two adjacent current traveling routes of the cleaning device; adjusting the initial interval to a target interval; the target interval having a distance smaller than the initial interval; and driving the cleaning device to perform the cleaning function with the a distance between two adjacent traveling routes being the target interval.

In some implementations, said determining the target operation mode of the cleaning device based on the relation between the dust intake amount and the predetermined dust amount threshold comprises: in response to detecting that the dust intake amount is greater than the predetermined dust amount threshold, activating a camera device of the cleaning device; collecting a region image in a traveling direction of the cleaning device by using the camera device; and determining the target operation mode of the cleaning device based on an identification result of the region image and the relation between the dust intake amount and the predetermined dust amount threshold.

In some implementations, the cleaning method further comprises, subsequent to collecting the region image in the traveling direction of the cleaning device by using the camera device: identifying a region object feature in the region image by using a predetermined image detection model; the region object feature comprising at least one of a size feature, a color feature, or a contour feature; and determining the identification result of the region image based on the region object feature. The identification result reflects a to-be-cleaned object in a region where the cleaning device is currently located.

In some implementations, said monitoring the dust intake amount of the dust collection box in the cleaning device comprises: monitoring a dust intake amount at an inlet of the dust collection box within a predetermined time period; or monitoring a weight change condition of the dust collection box within a predetermined time period.

According to the implementations of the present disclosure, a cleaning apparatus is provided. The cleaning apparatus comprises: a positioning planning module configured to determine a target cleaning region; a trajectory planning module configured to generate a cleaning trajectory in the target cleaning region in response to a path planning instruction; and a cleaning module configured to perform a cleaning action along the cleaning trajectory.

The cleaning device according to the implementations of the present disclosure comprises a memory, a processor, and a computer program stored in the memory and executable on the processor. The processor, when executing the program, implements the cleaning method described above.

A computer-readable storage medium according to the implementations of the present disclosure has a computer program stored thereon. The computer program, when executed by a processor, implements the cleaning method described above.

Additional aspects and advantages of the present disclosure will be provided in part in the following description, or will become apparent in part from the following description, or can be learned from practicing of the present disclosure.

### BRIEF DESCRIPTION OF THE DRAWINGS

The above and/or additional aspects and advantages of the present disclosure will become more apparent and more understandable from the following description of implementations taken in conjunction with the accompanying drawings, in which:
FIG. 1 is a schematic flowchart illustrating a cleaning method according to an implementation of the present disclosure;
FIG. 2 is a schematic flowchart illustrating a cleaning method according to an implementation of the present disclosure;
FIG. 3 is a schematic flowchart illustrating a cleaning method according to an implementation of the present disclosure;
FIG. 4 is a schematic flowchart illustrating a cleaning method according to an implementation of the present disclosure;
FIG. 5 is a schematic flowchart illustrating a cleaning method according to an implementation of the present disclosure;
FIG. 6 is a schematic flowchart illustrating a cleaning method according to an implementation of the present disclosure;
FIG. 7 is a schematic flowchart illustrating a cleaning method according to an implementation of the present disclosure;
FIG. 8 is a schematic flowchart illustrating a cleaning method according to an implementation of the present disclosure;
FIG. 9 is a schematic flowchart illustrating a cleaning method according to an implementation of the present disclosure;
FIG. 10 is a schematic diagram of a scene according to an implementation of the present disclosure;
FIG. 11 is a schematic diagram of a scene according to an implementation of the present disclosure;
FIG. 12 is a schematic diagram of a scene according to an implementation of the present disclosure;
FIG. 13 is a schematic flowchart illustrating a cleaning method according to an implementation of the present disclosure;
FIG. 14 is a schematic diagram of a scene according to an implementation of the present disclosure;
FIG. 15 is a schematic flowchart illustrating a cleaning method according to an implementation of the present disclosure;
FIG. 16 is a schematic diagram of a scene according to an implementation of the present disclosure;
FIG. 17 is a schematic diagram of a scene according to an implementation of the present disclosure;
FIG. 18 is a schematic flowchart illustrating a cleaning method according to an implementation of the present disclosure;
FIG. 19 is a schematic diagram of a module of a cleaning apparatus according to an implementation of the present disclosure;
FIG. 20 is a schematic diagram of a module of a cleaning apparatus according to an implementation of the present disclosure;
FIG. 21 is a schematic diagram of a module of a cleaning apparatus according to an implementation of the present disclosure; and
FIG. 22 is a schematic diagram of a cleaning device according to an implementation of the present disclosure.

### DETAILED DESCRIPTION

In order to make the purpose, technical solution and advantages of the present disclosure clearer, technical solutions according to the present disclosure will be clearly and completely described below in combination with accompanying drawings of the present disclosure. Obviously, the embodiments described below are only a part of the embodiments of the present disclosure, rather than all of the embodiments. Based on the embodiments of the present disclosure, all other embodiments obtained by those skilled in the art without any inventive effort fall within the protection scope of the present disclosure.

In descriptions of the present disclosure, descriptions with reference to the terms "an embodiment", "some embodiments", "examples", "specific examples", or "some examples" etc., mean that specific features, structure, materials, or characteristics described in conjunction with the embodiment or example are comprised in at least one embodiment or example of the embodiments of the present disclosure. In addition, the terms "first", "second", "third", and the like are used for descriptive purposes only and are not to be understood as indicating or implying relative importance. In this specification, the schematic representations of the above terms do not necessarily refer to the same embodiment or example. Moreover, the described specific features, structures, materials or characteristics may be combined in any one or more embodiments or examples in a suitable manner. In addition, those skilled in the art can combine the different embodiments or examples and the features of the different embodiments or examples described in this specification without contradicting each other.

Implementations of the present disclosure are described in further detail below in combination with the accompanying drawings and embodiments. The following embodiments are used to illustrate the present disclosure, but are not used to limit the scope of the present disclosure.

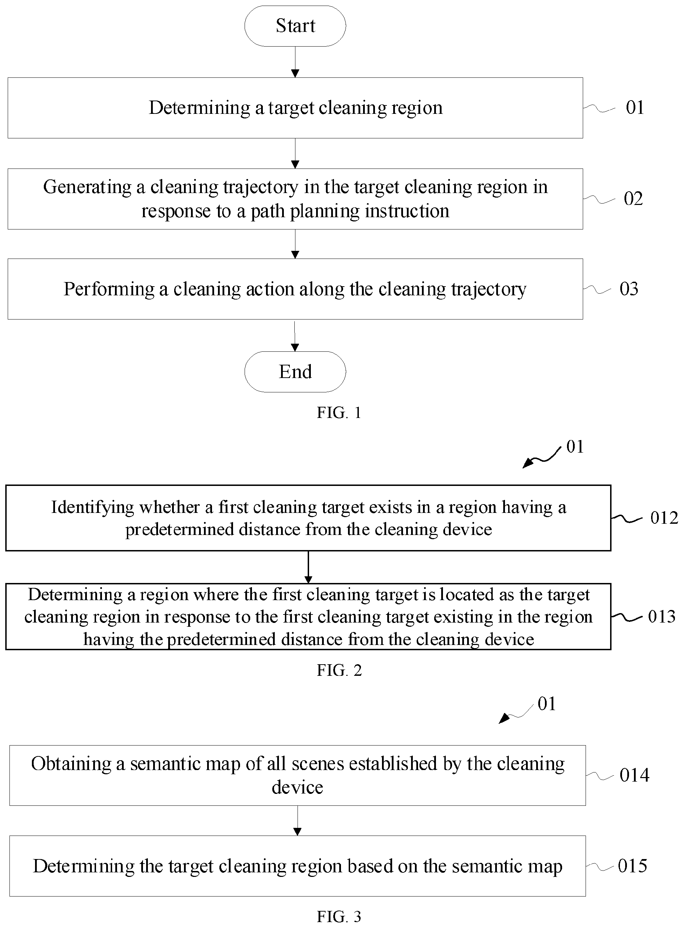

Referring to FIG. 1, the implementations of the present disclosure disclose a cleaning method applied in a cleaning device. The cleaning method comprises steps 01 to 03.

At step 01, a target cleaning region is determined.

At step 02, a cleaning trajectory is generated in the target cleaning region in response to a path planning instruction.

At step 03, a cleaning action is performed along the cleaning trajectory.

It needs to be noted that, in an actually dynamic application scene, such as scenes of people walking, pet moving, opening and closing of door, and furniture movement, an execution terminal of the method according to the embodiments of the present disclosure may be a cleaning device such as a sweeping robot, an automatic floor washing machine, an integrated sweeping and mopping robot, an automatic cleaning machine, an intelligent vacuum cleaner, and a robot vacuum cleaner.

It also needs to be noted that when performing a cleaning task, the cleaning device first determines a target cleaning region of the cleaning task within a cleaning scene. When encountering an obstacle while determining the target cleaning region, the cleaning device bypasses the detected obstacle and marks the detected obstacle. In a subsequent cleaning process, in response to that the detected obstacle is a dynamic obstacle and has a position movement while determining the target cleaning region, the cleaning device re-sweeps the region.

FIG. 2 is an exemplary flowchart of determining a target cleaning region according to some embodiments of this specification. In some embodiments, step 01 in FIG. 1 may be performed based on step 011 in FIG. 2.

At step 011, a target cleaning region of the cleaning device is determined in response to identifying that the cleaning device is activated at a non-charging position subsequent to activating the cleaning device.

It needs to be noted that in this embodiment, an execution subject of the proposed cleaning method may be a cleaning apparatus for a cleaning device. In order to illustrate the cleaning method proposed in the present disclosure more clearly, the following embodiments are illustrated exemplarily with the execution subject of the cleaning method as the cleaning apparatus for the cleaning device.

In this embodiment, the cleaning device is activated at the non-charging position, which means that a user moves the cleaning device to a certain position and manually activates the cleaning device. At this time, the cleaning device is in an local cleaning operation mode.

In an exemplary embodiment of the present disclosure, after the cleaning device is activated, the cleaning apparatus first identifies whether a position at which the cleaning device is activated is the non-charging position. In an exemplary embodiment of the present disclosure, after the cleaning device is in an activated state, a position identification component on the cleaning device is also activated accordingly. The position identification component is capable of detecting whether the cleaning device is at a charging position, and the cleaning apparatus may determine whether the position at which the cleaning device is activated is the non-charging position based on an identification result of the position identification component.

Further, in a case where the cleaning apparatus determines that the cleaning device is activated at the non-charging position, i.e., in a case where the cleaning device is moved to a certain position and manually activated, the cleaning apparatus needs to determine a target cleaning region needing to be cleaned by the cleaning device.

In an exemplary embodiment of the present disclosure, in response to the cleaning apparatus determining that the cleaning device is activated at the non-charging position, it indicates that the cleaning device is in a local cleaning mode. At this time, it may be determined that a cleaning intention of the user is to clean a certain range. Therefore, the cleaning apparatus needs to determine the target cleaning region, to accurately perform cleaning based on the cleaning intention of the user in the subsequent step.

In an exemplary embodiment of the present disclosure, the cleaning device is provided with a detection component for detecting a case in the vicinity of a position where the cleaning device is located. The cleaning device stores a semantic map of all scenes. The cleaning apparatus may analyze the cleaning intention of the user based on a detection result of the detection component and/or the semantic map described above, and further determine the target cleaning region of the cleaning device based on the cleaning intention of the user.

In this embodiment, the cleaning apparatus first determines whether the cleaning device is in a state where the cleaning device is activated at the non-charging position. When the cleaning device is in the state where the cleaning device is activated at the non-charging position, a region that the user wants to clean (i.e., the above-described target cleaning region) is determined, and then the cleaning device is controlled to clean the region that the user wants to clean. In the embodiment of the present disclosure, when the cleaning apparatus determines that the cleaning device is in the state where the cleaning device is activated at the non-charging position, the cleaning apparatus may automatically analyze the cleaning intention of the user and determine the region that the user wants to clean. In this way, a region cleaned by the cleaning device is more in line with user's requirements, and a user's satisfaction degree is improved. In addition, the cleaning device is controlled to clean only the region that the user wants to clean, which improves cleaning efficiency of the cleaning device.

Referring to FIG. 2, in some implementations, step 01 further comprises steps 012 and 013.

At step 012, it is identified that whether a first cleaning target exists in a region having a predetermined distance from the cleaning device.

At step 013, a region where the first cleaning target is located is determined as the target cleaning region in response to the first cleaning target existing in the region having the predetermined distance from the cleaning device.

In this embodiment, the predetermined distance is used to indicate an identifiable distance by the detection component of the cleaning device, and may also be a self-defined distance. It can be understood that the self-defined distance needs to be within a range of the identifiable distance by the detection component of the cleaning device. The above-described first cleaning target is used to indicate stains that are not easily cleaned or garbage.

In an exemplary embodiment of the present disclosure, a process of determining the target cleaning region of the cleaning device is that the cleaning apparatus first identifies whether the first cleaning target exists in the region having the predetermined distance from the cleaning device. In an exemplary embodiment of the present disclosure, the cleaning device is provided with a detection component capable of detecting the case in the vicinity of the position where the cleaning device is located. The cleaning apparatus may identify the case in the vicinity of the position where the cleaning device is located by the detection component, i.e., identify whether the first cleaning target exists in the vicinity of the cleaning device.

Exemplarily, the detection component may be one of an Al (image) identification device, a camera, a vidicon, and the like, but is not limited thereto.

Further, when the cleaning apparatus determines that the first cleaning target exists in the region having the predetermined distance from the cleaning device, the cleaning apparatus determines the region where the first cleaning target is located as the region that the user wants to clean, i.e., determines the region where the first cleaning target is located as the target cleaning region.

In an exemplary embodiment of the present disclosure, in response to the cleaning apparatus identifying that the first cleaning target exists in the region having the predetermined distance from the cleaning device, it indicates that the cleaning intention of the user is to clean the first cleaning target. At this time, the cleaning apparatus determines the region where the first cleaning target is located as the target cleaning region described above. In this way, the cleaning apparatus only controls the cleaning device to clean the region where the first cleaning target is located in the subsequent step, which makes the cleaning region of the cleaning device more in line with the user's requirements.

In this embodiment, when identifying that the first cleaning target exists in the region having the predetermined distance from the cleaning device, the cleaning apparatus determines the region where the first cleaning target is located as the target cleaning region, i.e., determines the region where the first cleaning target is located as the region that the user wants to clean. In this way, in the subsequent steps, the cleaning apparatus only controls the cleaning device to clean the region where the first cleaning target is located. In this way, the cleaning region of the cleaning device is more in line with the user's requirements, which improves the cleaning efficiency of the cleaning device and the user's satisfaction degree.

Referring to FIG. 3, in some implementations, step 01 further comprises steps 014 and 015.

At step 014, a semantic map of all scenes established by the cleaning device is obtained.

At step 015, the target cleaning region is determined based on the semantic map.

In this embodiment, the semantic map is used to indicate a semantic map of all scenes established by the cleaning device after cleaning all the scenes. All the scenes are used to indicate scenes of all rooms of a user's house. The semantic map specifically comprises a type of room, a position and type of items such as household appliances and furniture.

In an exemplary embodiment of the present disclosure, the process of determining the target cleaning region of the cleaning device is that the cleaning apparatus first obtains a semantic map established by the cleaning device after the cleaning device cleans all the scenes. In an exemplary embodiment of the present disclosure, after cleaning all the rooms in the user's house for the first time, the cleaning device establishes the semantic map of all the scenes in the user's house, updates the semantic map based on actual cases in each cleaning, and stores the updated semantic map in a storage unit of the cleaning device. The cleaning apparatus may obtain the semantic map through the storage unit. In addition, the cleaning apparatus obtains a semantic map updated after the latest cleaning. In this way, accuracy of the target cleaning region determined based on the semantic map in the subsequent step is ensured.

Further, the cleaning apparatus determines the target cleaning region based on the semantic map, i.e., determines the region that the user wants to clean based on the semantic map. In an exemplary embodiment of the present disclosure, based on the semantic map, a type of a room where the cleaning device is currently located may be determined, and it may be determined that whether furniture, household appliances, or the like exist at the position where the cleaning device is currently located. The cleaning intention of the user may be analyzed based on the information. The region that the user wants to clean may be determined based on the cleaning intention of the user. Therefore, the cleaning apparatus may determine the target cleaning region based on the semantic map.

In this embodiment, when it is determined that the cleaning device is in the state where the cleaning device is activated at the non-charging position, i.e., in response to the cleaning device activating the local cleaning mode, the cleaning apparatus may obtain the semantic map established by the cleaning device, analyze a case in the vicinity of a position where the cleaning device is currently located based on the semantic map, i.e., analyze the cleaning intention of the user, and then determine the target cleaning region based on the cleaning intention of the user, which ensures that the region cleaned by the cleaning device in the subsequent step is the region that the user wants to clean. In this way, the cleaning region of the cleaning device is made more in line with the user's requirements, the cleaning efficiency of the cleaning device is improved, and the user's satisfaction degree is improved.

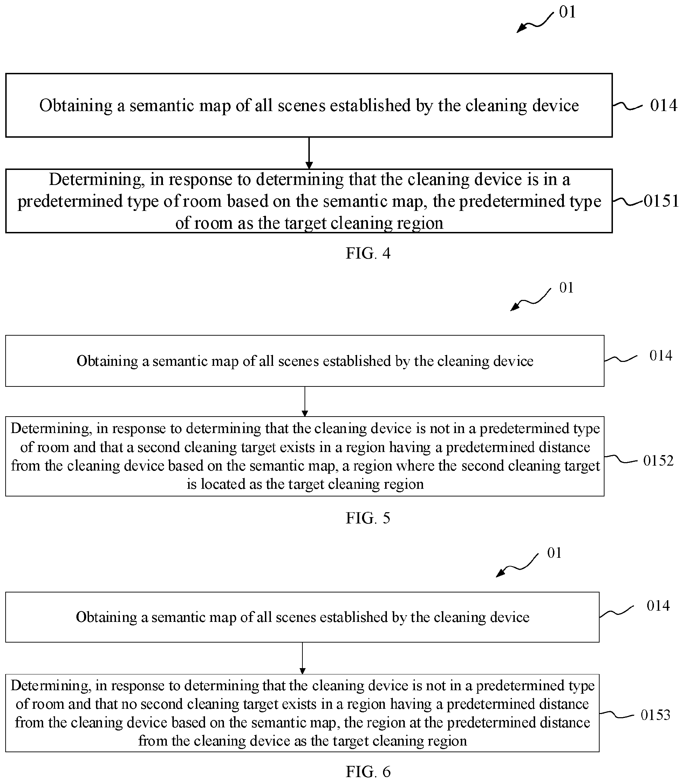

Referring to FIG. 4, in some implementations, step 014 comprises step 0151.

At step 0151, in response to determining that the cleaning device is in a predetermined type of room based on the semantic map, the predetermined type of room is determined as the target cleaning region.

In this embodiment, the predetermined type of room is used to indicate a room that is not easily cleaned or easily messy, such as a bathroom or a kitchen.

In an exemplary embodiment of the present disclosure, the process of determining the target cleaning region based on the semantic map is that the cleaning apparatus first analyzes whether a type of a room of the position where the cleaning device is currently located is the predetermined type of room based on the semantic map.

Further, in a case where the cleaning apparatus determines that the type of the room of the position where the cleaning device is currently located is the predetermined type of room, the cleaning apparatus determines the room as the region that the user wants to clean, i.e., determines the room as the target cleaning region.

In an exemplary embodiment of the present disclosure, in response to the cleaning apparatus analyzing that the type of the room of the position where the cleaning device is currently located is the predetermined type of room based on the semantic map, it indicates that the cleaning intention of the user is to clean the predetermined type of room. At this time, the cleaning apparatus determines the predetermined type of room (, i.e., the room where the cleaning device is currently located) as the target cleaning region. In this way, the cleaning apparatus only controls the cleaning device to clean the predetermined type of room in the subsequent step, enabling the cleaning region of the cleaning device to be more in line with the user's requirements.

In this embodiment, when the cleaning apparatus analyzes that the position where the cleaning device is currently located is the predetermined type of room based on the semantic map, the cleaning apparatus determines the predetermined type of room as the region that the user wants to clean, i.e., determines the predetermined type of room as the target cleaning region. In this way, in the subsequent step, the cleaning apparatus only controls the cleaning device to clean the predetermined type of room, enabling the cleaning region of the cleaning device to be more in line with the user's requirements. Therefore, the cleaning efficiency of the cleaning device is improved, and the user's satisfaction degree is improved.

Referring to FIG. 5, in some implementations, step 015 comprises step 0152.

At step 0152, in response to determining that the cleaning device is not in a predetermined type of room and that a second cleaning target exists in a region having a predetermined distance from the cleaning device based on the semantic map, a region where the second cleaning target is located is determined as the target cleaning region.

In this embodiment, the above-described second cleaning target is used to indicate household appliances or furniture, such as beds, teapoys, and washing machines, in the user's house that are likely to interrupt the cleaning process of the cleaning device.

In an exemplary embodiment of the present disclosure, the process of determining the target cleaning region based on the semantic map is that, in response to the cleaning apparatus analyzing that the type of the room of the position where the cleaning device is currently located is not the predetermined type of room based on the semantic map, the cleaning apparatus analyzes whether the second cleaning target exists in the region having the predetermined distance from the cleaning device based on the semantic map. In an exemplary embodiment of the present disclosure, since position information of the second cleaning target may be specified based on the semantic map, the cleaning apparatus may determine whether the second cleaning target exists in the region having the predetermined distance from the cleaning device based on the semantic map without the need to invoke the detection component of the cleaning device to detect the case in the vicinity of the cleaning device.

Further, when the cleaning apparatus analyzes that the second cleaning target exists in the region having the predetermined distance from the cleaning device based on the semantic map, the cleaning apparatus determines the region where the second cleaning target is located as the region that the user wants to clean, i.e., determines the region where the second cleaning target is located as the target cleaning region.

In an exemplary embodiment of the present disclosure, in response to the cleaning apparatus analyzing, based on the semantic map, that the type of the room of the position where the cleaning device is currently located is not the predetermined type of room, and that the second cleaning target exists in the region having the predetermined distance from the cleaning device, it indicates that the cleaning intention of the user is to clean the region where the second cleaning target is located. At this time, the cleaning apparatus determines the region where the second cleaning target is located as the target cleaning region. In this way, the cleaning apparatus only controls the cleaning device to clean the region where the second cleaning target is located in the subsequent step, enabling the cleaning region of the cleaning device to be more in line with the user's requirements.

In this embodiment, when the cleaning apparatus analyzes, based on the semantic map, that the position where the cleaning device is currently located is not the predetermined type of room, and that the second cleaning target exists in the region having the predetermined distance from the cleaning device, the cleaning apparatus determines the region where the second cleaning target is located as the region that the user wants to clean, i.e., determines the region where the second cleaning target is located as the target cleaning region. In this way, in the subsequent step, the cleaning apparatus only controls the cleaning device to clean the region where the second cleaning target is located. Therefore, the cleaning region of the cleaning device is more in line with the user's requirements, the cleaning efficiency of the cleaning device is improved, and the user's satisfaction degree is improved.

Referring to FIG. 6, in some implementations, step 015 comprises step 0153.

At step 0153, in response to determining that the cleaning device is not in a predetermined type of room and that no second cleaning target exists in a region having a predetermined distance from the cleaning device based on the semantic map, the region having the predetermined distance from the cleaning device is determined as the target cleaning region.

In this embodiment, the process of determining the target cleaning region based on the semantic map is that the cleaning apparatus first analyzes whether the type of the room of the position where the cleaning device is currently located is the predetermined type of room based on the semantic map, and whether the second cleaning target exists in the region having the predetermined distance from the cleaning device.

In an exemplary embodiment of the present disclosure, when the cleaning apparatus analyzes, based on the semantic map, that the type of the room of the position where the cleaning device is currently located is not the predetermined type of room, and that the second cleaning target exists in the region having the predetermined distance from the cleaning device, the cleaning apparatus determines the region having the predetermined distance from the cleaning device as the region that the user wants to clean, i.e., determines the region having the predetermined distance from the cleaning device as the target cleaning region.

In an exemplary embodiment of the present disclosure, in response to the cleaning apparatus analyzing, based on the semantic map, that the type of the room of the position where the cleaning device is currently located is not the predetermined type of room, and that no second cleaning target exists in the region having the predetermined distance from the cleaning device, it indicates that the cleaning intention of the user is to clean the region having the predetermined distance from the cleaning device. At this time, the cleaning apparatus determines the region having the predetermined distance from the cleaning device as the target cleaning region. In this way, the cleaning apparatus only controls the cleaning device to clean the region having the predetermined distance from the cleaning device in the subsequent step, enabling the cleaning region of the cleaning device to be more in line with the user's requirements.

In this embodiment, when analyzing, based on the semantic map, that the position where the cleaning device is currently located is not the predetermined type of room, and that no second cleaning target exists in the region having the predetermined distance from the cleaning device, the cleaning apparatus determines the region having the predetermined distance from the cleaning device as the region that the user wants to clean, i.e., determines the region having the predetermined distance from the cleaning device as the target cleaning region. In this way, in the subsequent step, the cleaning apparatus only controls the cleaning device to clean the region having the predetermined distance from the cleaning device, enabling the cleaning region of the cleaning device to be more in line with the user's requirements. Therefore, the cleaning efficiency of the cleaning device is improved, and the user's satisfaction degree is improved.

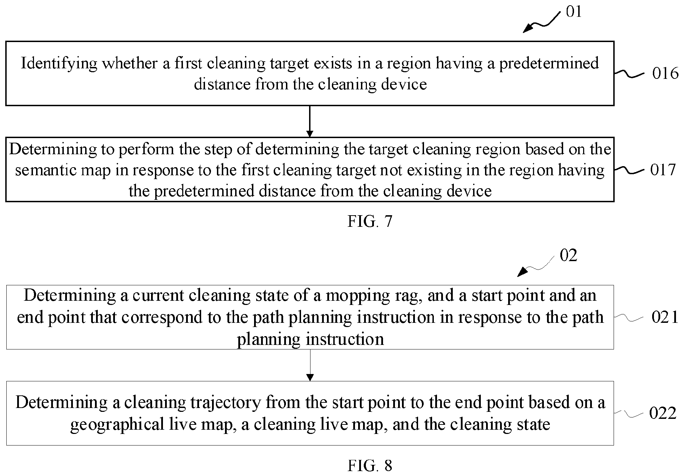

Referring to FIG. 7, in some implementations, before step 015, step 01 further comprises steps 016 and 017.

At step 016, it is identified that whether a first cleaning target exists in a region having a predetermined distance from the cleaning device.

At step 017, the step of determining the target cleaning region based on the semantic map is determined to be performed in response to the first cleaning target not existing in the region having the predetermined distance from the cleaning device.

In this embodiment, before the cleaning apparatus determines the target cleaning region based on the semantic map, the cleaning apparatus further needs to identify whether the first cleaning target exists in the region having the predetermined distance from the cleaning device. In an exemplary embodiment of the present disclosure, the cleaning device is provided with a detection component capable of detecting the case in the vicinity of the position where the cleaning device is located. The cleaning apparatus may identify the case in the vicinity of the position where the cleaning device is located through the detection component, i.e., identify whether the first cleaning target exists in the vicinity of the cleaning device.

Further, when the cleaning apparatus determines to identify that no first cleaning target exists in the region having the predetermined distance from the cleaning device, the cleaning apparatus determines that the step of determining the target cleaning region based on the semantic map may be performed.

In an exemplary embodiment of the present disclosure, in response to the cleaning apparatus identifying that no first cleaning target exists in the region having the predetermined distance from the cleaning device, it indicates that the cleaning intention of the user is not stains or garbage in the vicinity of the cleaning device. At this time, the cleaning apparatus may perform a step of analyzing that a specific cleaning intention of the user is to clean the predetermined type of room, to clean the vicinity of the second cleaning target, or to clean a region near the cleaning device based on the semantic map.

In this embodiment, before performing the step of determining the target cleaning region of the cleaning device based on the semantic map, the cleaning apparatus also needs a step of identifying whether the first target cleaning region exists in the region having the predetermined distance from the cleaning device. In this way, the cleaning intention of the user can be determined more accurately, and a more accurate target cleaning region can be further determined, enabling the cleaning region of the cleaning device to be more in line with the user's requirements. Therefore, the cleaning efficiency of the cleaning device is improved, and an experience effect of the user is improved.

In some implementations, step 03 comprises step 031.

At step 031, the target cleaning region is cleaned by using a cleaning scheme of cleaning first along edges and then in a zigzag manner, and the cleaning device returns to a charging position for charging upon completion.

In this embodiment, the process where the cleaning apparatus controls the cleaning device to clean the target cleaning region is that the cleaning apparatus controls the cleaning device to clean a boundary of the target cleaning region by using a cleaning scheme of cleaning first along edges, and then to clean the target cleaning region in a zigzag manner.

In an exemplary embodiment of the present disclosure, since the target cleaning region is a region that the user wants to focus on cleaning, the cleaning apparatus needs to adopt a cleaning scheme of cleaning first along edges and then in a zigzag manner. In this way, it is ensured that a required cleaning effect can be achieved.

Further, after the cleaning apparatus determines that the target cleaning region has been cleaned, the cleaning device is controlled to return to the charging position for charging. In an exemplary embodiment of the present disclosure, the cleaning apparatus may determine whether cleaning of the target cleaning region is completed based on a cleaning time of the cleaning device, or may determine whether the cleaning of the target cleaning region is completed by detecting the cleaning case in the vicinity of the cleaning device by using the detection component of the cleaning device. However, the present disclosure is not limited thereto.

In this embodiment, the cleaning apparatus controls the cleaning device to clean the target cleaning region by using the cleaning scheme of cleaning first along edges and then in the zigzag manner. In this way, the cleaning of the target cleaning region is ensured, which can achieve the required cleaning effect, and improves the user's satisfaction degree.

In some implementations, before step 03, the cleaning method further comprises step 04.

At step 04, a cleaning scheme of the cleaning device on the target cleaning region is prompted via voice.

In this embodiment, before controlling the cleaning device to clean the target cleaning region, the cleaning apparatus further needs to play voice prompt information to remind the user about a scheme that the cleaning apparatus controls the cleaning device to clean the target cleaning region.

In an exemplary embodiment of the present disclosure, before the cleaning device cleans the target cleaning region, the cleaning apparatus plays the voice prompt information, enabling the user to know a to-be-cleaned region. For example, in response to the to-be-cleaned region by the cleaning device being a region where the teapoy is located, the cleaning apparatus plays voice prompt information that "a region under the teapoy is about to be cleaned". In this way, the user can determine whether the to-be-cleaned region by the cleaning device is a region desired by the user.

In this embodiment, before controlling the cleaning device to clean the target cleaning region, the cleaning apparatus also plays voice prompt information of the to-be-cleaned region. In this way, the user can determine whether the to-be-cleaned region by the cleaning device is the region desired by the user. Moreover, the cleaning region of the cleaning device can be adjusted timely when a cleaning region played by the voice prompt information is not the region that the user wants to clean.

In the above-described embodiment, the first cleaning target comprises any one of a stain, small granular garbage, or flocculent garbage.

In this embodiment, the first cleaning target may be a stain that is not easily cleaned, small granular garbage that is not easily cleaned, or flocculent garbage that is not easily cleaned, but is not limited thereto.

In the above embodiment, the second cleaning target is a household appliance or furniture.

In this embodiment, the second cleaning target may be a household appliance or furniture, but is not limited thereto.

It needs to be noted that FIG. 2 is only an exemplary description, and a method of determining the target region is not limited to a content described in the above-described embodiments.

FIG. 8 is an exemplary flowchart of generating the cleaning trajectory according to some embodiments of this specification. In some embodiments, step 02 in FIG. 1 may be performed based on steps 021 and 022 in FIG. 8.

At step 021, a current cleaning state of a mopping rag, and a start point and an end point that correspond to the path planning instruction are determined in response to the path planning instruction.

At step 022, a cleaning trajectory from the start point to the end point is determined based on a geographical live map, a cleaning live map, and the cleaning state.

In a possible implementation, prior to step 021, the target cleaning region is divided into a plurality of regions, and a cleaning sequence of the plurality of regions is determined. A controller of the cleaning device splits a cleaning task into a plurality of serialized sub-tasks and transmits the corresponding sub-tasks in a sequence of serialization. Each sub-task carries a corresponding sub-region.

In a possible implementation, in step 021, determining the start point and the end point that correspond to the path planning instruction comprises: determining the start point and the end point that correspond to the path planning instruction based on a current cleaning stage of the cleaning device and the cleaning sequence of the plurality of regions.

In a possible implementation, in step 021, determining the current cleaning state of the mopping rag comprises: determining that the current cleaning state of the mopping rag is clean in response to a current cleaning stage of the cleaning device being a departure stage after self-cleaning at a water station; and determining that the current cleaning state of the mopping rag is dirty in response to the current cleaning stage of the cleaning device being a stage from a currently cleaned region to a to-be-cleaned region or a stage of returning to the water station for cleaning the mopping rag.

In a possible implementation, in step 022, determining the cleaning trajectory from the start point to the end point based on the geographical live map, the cleaning live map, and the cleaning state comprises: determining a region free of obstacles based on the geographical live map; and determining the cleaning trajectory from the start point to the end point based on the region free of obstacles and the cleaning live map in accordance with a predetermined passing strategy corresponding to the cleaning state.

In a possible implementation, determining the cleaning trajectory from the start point to the end point based on the region free of obstacles and the cleaning live map in accordance with the predetermined passing strategy corresponding to the cleaning state comprises: determining a currently cleaned region from the cleaning live map in response to the cleaning state being clean; determining all cleaned regions free of obstacles between the start point and the end point based on the region free of obstacles and the currently cleaned region; and determining at least one continuous movement trajectory formed between the start point, all the cleaned regions free of obstacles, and the end point, and determining a shortest movement trajectory from the at least one movement trajectory as the cleaning trajectory from the start point to the end point.

In a possible implementation, determining the cleaning trajectory from the start point to the end point based on the region free of obstacles and the cleaning live map in accordance with the predetermined passing strategy corresponding to the cleaning state comprises: determining all to-be-cleaned regions from the cleaning live map in response to the cleaning state being dirty; determining all to-be-cleaned regions free of obstacles between the start point and the end point based on the region free of obstacles and all the to-be-cleaned regions; and determining at least one continuous movement trajectory formed between the start point, all the to-be-cleaned regions free of obstacles, and the end point, and determining a shortest movement trajectory from the at least one movement trajectory as the cleaning trajectory from the start point to the end point.

In a possible implementation, the method further comprises: determining that no continuous movement trajectory is formed, and determining the cleaning trajectory from the start point to the end point based on the region free of obstacles.

In a possible implementation, before step 021, the user remotely controls the cleaning device through an APP or a remote controller, or directly controls the cleaning device by pressing a key on the cleaning device, to be activated for cleaning.

In a possible implementation, before step 021, the method further comprises: initializing a multi-layer map by the controller of the cleaning device, to obtain information of a map of each layer in the multi-layer map, and performs regular and real-time updates of the map information during mopping.

Through accurate geographic information obtained by utilizing the multi-layer map, different cleaning trajectory changes may be performed according to a geographic live map where the cleaning device is located, the cleaning live map, and the cleaning state. The change of the cleaning trajectories is self-adaptive. Next cleaning trajectories are adjusted based on a position and stage of the cleaning device. In this way, secondary pollution of the ground can be reduced, with efficient cleaning.

In a possible implementation, a geographic live case in each sub-region is determined from a live case of an obstacle layer of a raster layer in each sub-region. A cleaning live case in each sub-region is determined based on a live case of a cleaning live layer of the raster layer in each sub-region.

During mopping path planning, a geographic live case and a cleaning live case of a region in the raster layer are determined based on an obstacle layer state of the raster layer and a cleaning live layer state of the raster layer.

In a stage where a mop of the cleaning device has just been cleaned, passing through a cleaned region free of obstacles is prioritized by using the obstacle layer state and the cleaning live layer state. In a normal cleaning stage or an interruption stage or a completion stage, there is a high probability that the mop of the cleaning device is in an unclean stage, and passing through an uncleaned region is prioritized by using the obstacle layer state and the cleaning live layer state.

During path planning, a stage to which the cleaning device belongs is fully considered, and different planning strategies are adopted at different stages, to avoid secondary pollution more efficiently.

In a possible implementation, the geographical live map and the cleaning live map are updated in real time based on respective setting cycles of the geographical live map and the cleaning live map.

The setting cycles of the real-time updated geographical live map and cleaning live map may be set to be different or the same as required by the user.

Necessity of updating of the obstacle live case arises from changes caused by a mobile obstacle or a temporary obstacle.

The so-called updating may be regarded as updating of attribute values corresponding to a layer in the raster map.

In a possible implementation, the method further comprises: in response to cleaning trajectory planning of the sub-region failing, cleaning trajectory planning of the next sub-region is performed.

In response to cleaning trajectory planning of a certain sub-region failing, it is considered that the sub-region is unreachable. The sub-region is ignored, a cleaning sub-task is switched to the next sub-region, and a mopping path of the next sub-region continues to be re-planned. In response to no next sub-region, the mopping ends.

A path planning algorithm used during path planning of the cleaning device in the embodiments of the present disclosure comprises, but is not limited to, DijkStra, A*, JPS, and the like. The purpose is to find the shortest path with the least pollution.

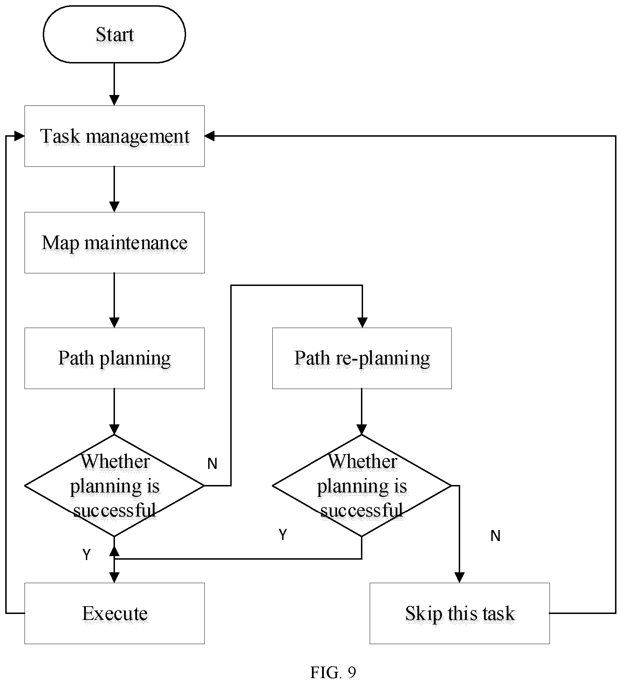

FIG. 9 illustrates a cleaning method according to an embodiment of the present disclosure. Referring to FIG. 9, the user remotely controls the cleaning device through the APP or remote controller, or directly controls the cleaning device by pressing the key on the cleaning device, to be activated for cleaning. A task management module of a control apparatus of the cleaning device performs mopping path planning based on the received mopping instruction to prepare to activate mopping. The mopping instruction carries information such as a cleaning task type and a mopping region. The cleaning task is split into the plurality of serialized sub-tasks, and the corresponding sub-task is delivered based on the sequence of serialization. Each sub-task carries the corresponding sub-region. Moreover, a map module of the controller of the cleaning device performs multi-layer map initialization, to obtain the information of the map of each layer in the multi-layer map, and periodically updates the map information in real time during mopping.

During path planning of each sub-region, in response to the planning being successful, mopping is performed in the sub-region based on the planning path. In response to the planning failing, planning is re-performed by adjusting a condition of the considered map layer. In response to the planning being successful at this time, planning is performed. In response to the planning still failing at this time, the path planning of this sub-region is skipped, the cleaning sub-task is switched to a cleaning sub-task of the next sub-region, and the mopping path of the next sub-region continues to be re-planned. In response to no next sub-region, the mopping ends.

The current cleaning state of the mopping rag, and the start point and the end point that correspond to the path planning instruction are determined in response to the path planning instruction. The cleaning trajectory from the start point to the end point is further determined based on the geographical live map, the cleaning live map, and the cleaning state.

When the cleaning state of the rag is determined, it is determined that the current cleaning state of the mopping rag is clean in response to the current cleaning stage of the cleaning device being the departure stage after to self-cleaning at the water station. It is determined that the current cleaning state of the mopping rag is dirty in response to the current cleaning stage of the cleaning device being the stage from the currently cleaned region to the to-be-cleaned region or the stage of returning to the water station for cleaning the mopping rag.

The region free of obstacles is determined based on the geographical live map. The cleaning trajectory from the start point to the end point is determined based on the region free of obstacles and the cleaning live map in accordance with the predetermined passing strategy corresponding to the cleaning state.

The currently cleaned region is determined from the cleaning live map in response to the cleaning state being clean. All cleaned regions free of obstacles between the start point and the end point are determined based on the region free of obstacles and the currently cleaned region. The at least one continuous movement trajectory formed between the start point, all the cleaned regions free of obstacles, and the end point are determined, and the shortest movement trajectory from the at least one movement trajectory is determined as the cleaning trajectory from the start point to the end point.

All the to-be-cleaned regions are determined from the cleaning live map in response to the cleaning state being dirty. All the to-be-cleaned regions free of obstacles between the start point and the end point are determined based on the region free of obstacles and all the to-be-cleaned regions. The at least one continuous movement trajectory formed between the start point, all the to-be-cleaned regions free of obstacles, and the end point are determined, and the shortest movement trajectory from the at least one movement trajectory is determined as the cleaning trajectory from the start point to the end point.

In response to determining that no continuous movement trajectory is formed, the cleaning trajectory from the start point to the end point is determined based on the region free of obstacles.

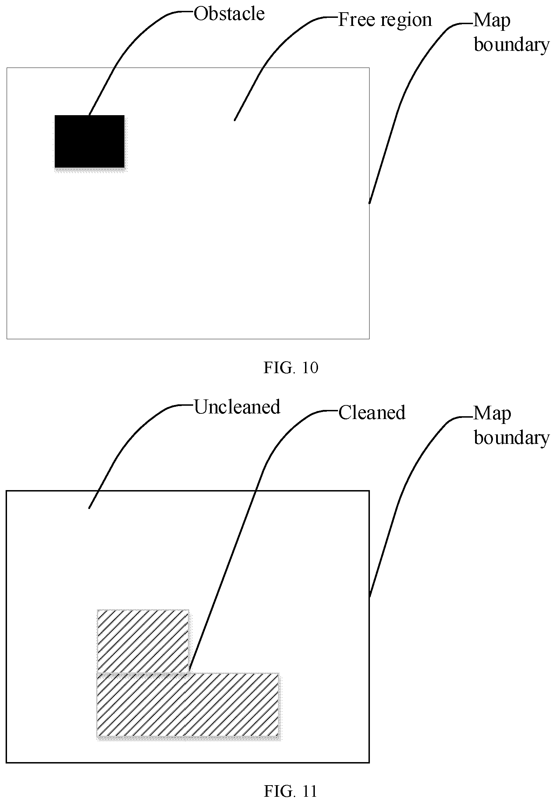

FIG. 10 shows layer 1 of a raster map. Layer 1 stores information of map obstacles and forbidden regions (equivalent to obstacles) recorded by combining a plurality of sensors. As shown in FIG. 10, a region type in the layer comprises an obstacle, a free region, and a map boundary.

FIG. 11 shows layer 2 of the raster map. Layer 2 stores cleaning trajectory information that has been performed by the cleaning device for cleaning. As shown in FIG. 11, the region type in the layer comprises an uncleaned type, a cleaned type, and a map boundary.

In a possible implementation, in the entire cleaning process, a stage involving path planning comprises a stage where the cleaning device departs from the water station after cleaning the rag (stage 1 for short), a stage where the cleaning device goes from one cleaned region to another to-be-cleaned region during normal cleaning (stage 2 for short), and a stage where the cleaning device needs to return to the water station for cleaning the rag when the cleaning is interrupted or ends (stage 3 for short).

At each stage, it is necessary to plan a reasonable path for the cleaning device for the machine to walk. At this time, a multi-layer raster map is adopted. Different planning strategies are used based on a difference in geographical stages where the cleaning device is located, to ensure that the machine preferentially walks the cleaned place in stage 1 and uncleaned regions in stages 2 and 3. In this way, the secondary pollution of the ground is reduced.

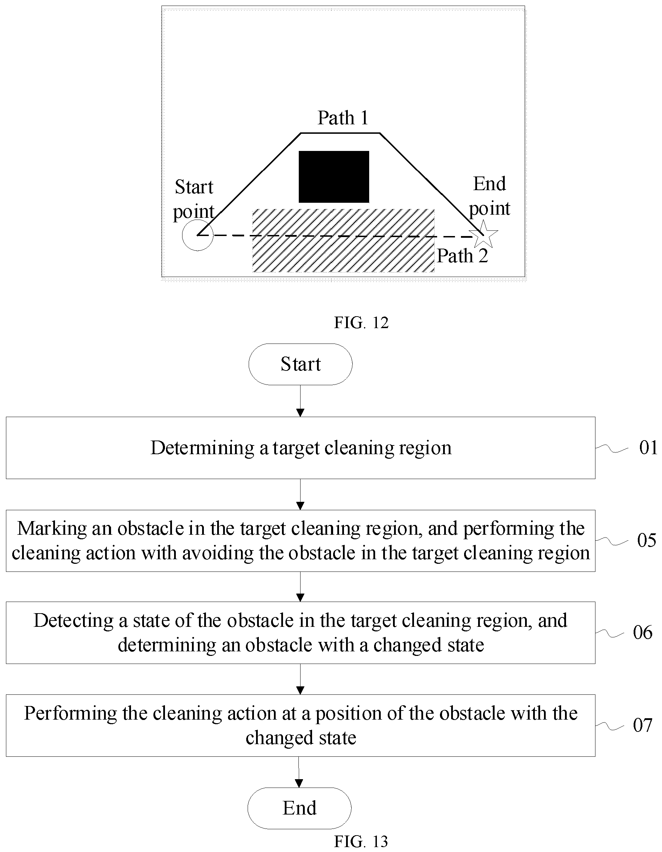

FIG. 12 shows a schematic diagram of an embodiment of planning path. It can be seen that there are two optional paths, i.e., path 1 and path 2, during path planning of the cleaning task in this sub-region. The path 2 may be a path of a cleaned region that is free of obstacles and selected by the cleaning device to pass through after the cleaning device is cleaned at the start point; and the path 2 may be a path of an uncleaned region that is free of obstacles and selected by the cleaning device to pass through when the cleaning device returns from the end point to the start point.

During the cleaning of the cleaning device, a two-layer raster map is maintained in real time, and a raster map of each layer stores a type of environmental features. The layer 1 saves the information of map obstacles and forbidden regions (equivalent to obstacles) recorded by combining the plurality of sensors. The layer 2 saves the cleaning trajectory information that has been performed by the cleaning device for cleaning. In the path planning of the cleaning device, different planning strategies are adopted based on different cleaning stages where the robot is located. When navigating after normal cleaning and for cleaning the rag backwards, priority is given to a place that has not been mopped. After the rag is washed for continuing to sweep, priority is given to a place that has been mopped. In this way, the secondary pollution of the ground is reduced.

According to the embodiments of the present disclosure, the most common object information needing to be considered in an application scene of the cleaning device is taken as an example. However, except for the obstacle information and the trajectory information of the cleaning device that has been performed for cleaning, there may also be a layer of information personally set by the user, and the like. The embodiments of the present disclosure do not limit this.

It needs to be noted that, in the embodiments of the present disclosure, a scheme of obtaining the geographical live case comprises, but is not limited to, a raster map.

In some implementations, step 021 comprises steps 0211 and 0212.

At step 0211, it is determined that the current cleaning state of the mopping rag is clean in response to a current cleaning stage of the cleaning device being a departure stage after self-cleaning at a water station.

At step 0212, it is determined that the current cleaning state of the mopping rag is dirty in response to the current cleaning stage of the cleaning device being a stage from a currently cleaned region to a to-be-cleaned region or a stage of returning to the water station for cleaning the mopping rag.

In a possible implementation, before step 0211, the user remotely controls the cleaning device through the APP or remote controller, or directly controls the cleaning device by pressing the key on the cleaning device, to be activated for cleaning.

In a possible implementation, in step 0211, the controller of the cleaning device performs mopping path planning based on the received mopping instruction to prepare to activate mopping. The mopping instruction carries information such as a cleaning task type and a mopping region.

In a possible implementation, the geographic live map in each sub-region is determined from the live case of the obstacle layer of the raster layer in each sub-region. The cleaning live map in each sub-region is determined based on the live case of the cleaning live layer of the raster layer in each sub-region.

During mopping path planning, an obstacle state and a cleaning live case of a region in the raster layer are determined based on the obstacle layer state of the raster layer and the cleaning live layer state of the raster layer.

In the stage where the mop of the cleaning device has just been cleaned, passing through the cleaned region free of obstacles is prioritized by using the obstacle layer state and the cleaning live layer state. In the normal cleaning stage or the interruption stage or the completion stage, there is a high probability that the mop of the cleaning device is in the unclean stage, and passing through the uncleaned region is prioritized by using the obstacle layer state and the cleaning live layer state.

During the path planning, the stage to which the cleaning device belongs is fully considered, and different planning strategies are adopted at different stages, to avoid the secondary pollution more efficiently.

In a possible implementation, the current cleaning state of the mopping rag of the cleaning device, and the geographical live map and the cleaning live map in each sub-region are updated in real time based respective setting cycles of the current cleaning state of the mopping rag of the cleaning device, and the geographical live map and the cleaning live map in each sub-region.

The setting cycles of the real-time updated geographical live map and cleaning live map may be set to be different or the same as required by the user.

The necessity of the updating of the obstacle live case arises from the changes caused by the mobile obstacle or the temporary obstacle. The so-called updating may be regarded as the updating of the attribute values corresponding to the layer in the raster map.

The path planning algorithm used during the path planning of the cleaning device in the embodiments of the present disclosure comprises, but is not limited to, DijkStra, A*, JPS, and the like. The purpose is to find the shortest path with the least pollution.

In some implementations, step 021 further comprises steps 0213 and 0214.

At step 0213, a region free of obstacles is determined based on the geographical live map.

At step 0214, the cleaning trajectory from the start point to the end point is determined based on the region free of obstacles and the cleaning live map in accordance with a predetermined passing strategy corresponding to the cleaning state.

During the mopping path planning, the obstacle state and the cleaning live case of the region in the raster layer are determined based on the obstacle layer state of the raster layer and the cleaning live layer state of the raster layer.

In the stage where the mop of the cleaning device has just been cleaned, passing through the cleaned region free of obstacles is prioritized by using the obstacle layer state and the cleaning live layer state. In the normal cleaning stage or the interruption stage or the completion stage, there is a high probability that the mop of the cleaning device is in the unclean stage, and passing through the uncleaned region is prioritized by using the obstacle layer state and the cleaning live layer state.

During the path planning, the stage to which the cleaning device belongs is fully considered, and different planning strategies are adopted at different stages, to avoid the secondary pollution more efficiently.

In a possible implementation, the current cleaning state of the mopping rag of the cleaning device, and the geographical live map and the cleaning live map in each sub-region are updated in real time based the respective setting cycles of the current cleaning state of the mopping rag of the cleaning device, and the geographical live map and the cleaning live map in each sub-region.

The setting cycles of the real-time updated geographical live map and cleaning live map may be set to be different or the same as required by the user.

The necessity of the updating of the obstacle live case arises from the changes caused by the mobile obstacle or the temporary obstacle.

The so-called updating may be regarded as the updating of the attribute values corresponding to the layer in the raster map.

The path planning algorithm used during the path planning of the cleaning device in the embodiments of the present disclosure comprises, but is not limited to, DijkStra, A*, JPS, and the like. The purpose is to find the shortest path with the least pollution.

In some implementations, step 02 further comprises steps a and b.

At step a, a current cleaning state of a mopping rag, and a start point and an end point that correspond to the path planning instruction are determined in response to the path planning instruction. It is determined that the current cleaning state of the mopping rag is clean in response to a current cleaning stage of the cleaning device being a departure stage after self-cleaning at a water station. It is determined that the current cleaning state of the mopping rag is dirty in response to the current cleaning stage of the cleaning device being a stage from a currently cleaned region to a to-be-cleaned region or a stage of returning to the water station for cleaning the mopping rag.

At step b, a region free of obstacles is determined based on the geographical live map. The cleaning trajectory from the start point to the end point is determined based on the region free of obstacles and the cleaning live map in accordance with a predetermined passing strategy corresponding to the cleaning state.

In a possible implementation, in step b, the currently cleaned region is determined from the cleaning live map in response to the cleaning state being clean. All the cleaned regions free of obstacles between the start point and the end point are determined based on the region free of obstacles and the currently cleaned region. The at least one continuous movement trajectory formed between the start point, all the cleaned regions free of obstacles, and the end point is determined, and the shortest movement trajectory from the at least one movement trajectory is determined as the cleaning trajectory from the start point to the end point.

In a possible implementation, in step b, all the to-be-cleaned regions are determined from the cleaning live map in response to the cleaning state being dirty. All the to-be-cleaned regions free of obstacles between the start point and the end point are determined based on the region free of obstacles and all the to-be-cleaned regions. The at least one continuous movement trajectory formed between the start point, all the to-be-cleaned regions free of obstacles, and the end point is determined, and the shortest movement trajectory from the at least one movement trajectory is determined as the cleaning trajectory from the start point to the end point.

In a possible implementation, before step a, the user remotely controls the cleaning device through the APP or the remote controller, or directly controls the cleaning device by pressing the key on the cleaning device, to be activated for cleaning.

In a possible implementation, in step a, the controller of the cleaning device performs mopping path planning based on the received mopping instruction to prepare to activate mopping. The mopping instruction carries information such as the cleaning task type and the mopping region.

In a possible implementation, the geographic live map in each sub-region is determined from the live case of the obstacle layer of the raster layer in each sub-region. The cleaning live map in each sub-region is determined based on the live case of the cleaning live layer of the raster layer in each sub-region.

During the mopping path planning, the obstacle state and the cleaning live case of the region in the raster layer are determined based on the obstacle layer state of the raster layer and the cleaning live layer state of the raster layer.

In the stage where the mop of the cleaning device has just been cleaned, passing through the cleaned region free of obstacles is prioritized by using the obstacle layer state and the cleaning live layer state. In the normal cleaning stage or the interruption stage or the completion stage, there is a high probability that the mop of the cleaning device is in the unclean stage, and passing through the uncleaned region is prioritized by using the obstacle layer state and the cleaning live layer state.

During the path planning, the stage to which the cleaning device belongs is fully considered, and different planning strategies are adopted at different stages, to avoid the secondary pollution more efficiently.

In a possible implementation, the current cleaning state of the mopping rag of the cleaning device, and the geographical live map and the cleaning live map in each sub-region are updated in real time based the respective setting cycles of the current cleaning state of the mopping rag of the cleaning device, and the geographical live map and the cleaning live map in each sub-region.

The setting cycles of the real-time updated geographical live map and cleaning live map may be set to be different or the same as required by the user.

The necessity of the updating of the obstacle live case arises from the changes caused by the mobile obstacle or the temporary obstacle.

The so-called updating may be regarded as the updating of the attribute values corresponding to the layer in the raster map.

The path planning algorithm used during the path planning of the cleaning device in the embodiments of the present disclosure comprises, but is not limited to, DijkStra, A*, JPS, and the like. The purpose is to find the shortest path with the least pollution.

In some implementations, step 02 further comprises steps c and d.

At step c, a current cleaning state of a mopping rag, and a start point and an end point that correspond to the path planning instruction are determined in response to the path planning instruction. It is determined that the current cleaning state of the mopping rag is clean in response to a current cleaning stage of the cleaning device being a departure stage after self-cleaning at a water station. It is determined that the current cleaning state of the mopping rag is dirty in response to the current cleaning stage of the cleaning device being a stage from a currently cleaned region to a to-be-cleaned region or a stage of returning to the water station for cleaning the mopping rag.

At step d, a region free of obstacles is determined based on the geographical live map. The cleaning trajectory from the start point to the end point is determined based on the region free of obstacles and the cleaning live map in accordance with a predetermined passing strategy corresponding to the cleaning state.

In a possible implementation, in step d, the currently cleaned region is determined from the cleaning live map in response to the cleaning state being clean. All the cleaned regions free of obstacles between the start point and the end point are determined based on the region free of obstacles and the currently cleaned region. The at least one continuous movement trajectory formed between the start point, all the cleaned regions free of obstacles, and the end point is determined, and the shortest movement trajectory from the at least one movement trajectory is determined as the cleaning trajectory from the start point to the end point.

In a possible implementation, in step d, all the to-be-cleaned regions are determined from the cleaning live map in response to the cleaning state being dirty. All the to-be-cleaned regions free of obstacles between the start point and the end point are determined based on the region free of obstacles and all the to-be-cleaned regions. The at least one continuous movement trajectory formed between the start point, all the to-be-cleaned regions free of obstacles, and the end point is determined, and the shortest movement trajectory from the at least one movement trajectory is determined as the cleaning trajectory from the start point to the end point.

In a possible implementation, the method further comprises: determining that no continuous movement trajectory is formed, and determining the cleaning trajectory from the start point to the end point based on the region free of obstacles.

In a possible implementation, before step c, the user remotely controls the cleaning device through the APP or the remote controller, or directly controls the cleaning device by pressing the key on the cleaning device, to be activated for cleaning.

In a possible implementation, in step c, the controller of the cleaning device performs mopping path planning based on the received mopping instruction to prepare to activate mopping. The mopping instruction carries information such as the cleaning task type and the mopping region.

In a possible implementation, the geographic live map in each sub-region is determined from the live case of the obstacle layer of the raster layer in each sub-region. The cleaning live map in each sub-region is determined based on the live case of the cleaning live layer of the raster layer in each sub-region.

During the mopping path planning, the obstacle state and the cleaning live case of the region in the raster layer are determined based on the obstacle layer state of the raster layer and the cleaning live layer state of the raster layer.

In the stage where the mop of the cleaning device has just been cleaned, passing through the cleaned region free of obstacles is prioritized by using the obstacle layer state and the cleaning live layer state. In the normal cleaning stage or the interruption stage or the completion stage, there is a high probability that the mop of the cleaning device is in the unclean stage, and passing through the uncleaned region is prioritized by using the obstacle layer state and the cleaning live layer state.

During the path planning, the stage to which the cleaning device belongs is fully considered, and different planning strategies are adopted at different stages, to avoid the secondary pollution more efficiently.

In a possible implementation, the current cleaning state of the mopping rag of the cleaning device, and the geographical live map and the cleaning live map in each sub-region are updated in real time based the respective setting cycles of the current cleaning state of the mopping rag of the cleaning device, and the geographical live map and the cleaning live map in each sub-region.

The setting cycles of the real-time updated geographical live map and cleaning live map may be set to be different or the same as required by the user.

The necessity of the updating of the obstacle live case arises from the changes caused by the mobile obstacle or the temporary obstacle.

The so-called updating may be regarded as the updating of the attribute values corresponding to the layer in the raster map.

The path planning algorithm used during the path planning of the cleaning device in the embodiments of the present disclosure comprises, but is not limited to, DijkStra, A*, JPS, and the like. The purpose is to find the shortest path with the least pollution.

In some implementations, step 02 further comprises steps e and f.

At step e, a current cleaning state of a mopping rag, and a start point and an end point that correspond to the path planning instruction are determined in response to the path planning instruction. It is determined that the current cleaning state of the mopping rag is clean in response to a current cleaning stage of the cleaning device being a departure stage after to self-cleaning at a water station. It is determined that the current cleaning state of the mopping rag is dirty in response to the current cleaning stage of the cleaning device being a stage from a currently cleaned region to a to-be-cleaned region or a stage of returning to the water station for cleaning the mopping rag.

At step f, a region free of obstacles is determined based on the geographical live map. The cleaning trajectory from the start point to the end point is determined based on the region free of obstacles and the cleaning live map in accordance with a predetermined passing strategy corresponding to the cleaning state.

In a possible implementation, prior to in response to the path planning instruction at step e, the step further comprises: dividing the target cleaning region into a plurality of regions, and determining a cleaning sequence of the plurality of regions.

In a possible implementation, said determining the start point and the end point that correspond to the path planning instruction comprises: determining the start point and the end point that correspond to the path planning instruction based on a current cleaning stage of the cleaning device and the cleaning sequence of the plurality of regions.

In a possible implementation, in step f, the currently cleaned region is determined from the cleaning live map in response to the cleaning state being clean. All the cleaned regions free of obstacles between the start point and the end point are determined based on the region free of obstacles and the currently cleaned region. The at least one continuous movement trajectory formed between the start point, all the cleaned regions free of obstacles, and the end point is determined, and the shortest movement trajectory from the at least one movement trajectory is determined as the cleaning trajectory from the start point to the end point.

In a possible implementation, in step f, all the to-be-cleaned regions are determined from the cleaning live map in response to the cleaning state being dirty. All the to-be-cleaned regions free of obstacles between the start point and the end point are determined based on the region free of obstacles and all the to-be-cleaned regions. The at least one continuous movement trajectory formed between the start point, all the to-be-cleaned regions free of obstacles, and the end point is determined, and the shortest movement trajectory from the at least one movement trajectory is determined as the cleaning trajectory from the start point to the end point.

In a possible implementation, the method further comprises: determining that no continuous movement trajectory is formed, and determining the cleaning trajectory from the start point to the end point based on the region free of obstacles.

In a possible implementation, before step e, the user remotely controls the cleaning device through the APP or the remote controller, or directly controls the cleaning device by pressing the key on the cleaning device, to be activated for cleaning.

In a possible implementation, in step e, the controller of the cleaning device performs mopping path planning based on the received mopping instruction to prepare to activate mopping. The mopping instruction carries information such as the cleaning task type and the mopping region.

In a possible implementation, the geographic live map in each sub-region is determined from the live case of the obstacle layer of the raster layer in each sub-region. The cleaning live map in each sub-region is determined based on the live case of the cleaning live layer of the raster layer in each sub-region.

During the mopping path planning, the obstacle state and the cleaning live case of the region in the raster layer are determined based on the obstacle layer state of the raster layer and the cleaning live layer state of the raster layer.

In the stage where the mop of the cleaning device has just been cleaned, passing through the cleaned region free of obstacles is prioritized by using the obstacle layer state and the cleaning live layer state. In the normal cleaning stage or the interruption stage or the completion stage, there is a high probability that the mop of the cleaning device is in the unclean stage, and passing through the uncleaned region is prioritized by using the obstacle layer state and the cleaning live layer state.

During the path planning, the stage to which the cleaning device belongs is fully considered, and different planning strategies are adopted at different stages, to avoid the secondary pollution more efficiently.

In a possible implementation, the current cleaning state of the mopping rag of the cleaning device, and the geographical live map and the cleaning live map in each sub-region are updated in real time based the respective setting cycles of the current cleaning state of the mopping rag of the cleaning device, and the geographical live map and the cleaning live map in each sub-region.

The setting cycles of the real-time updated geographical live map and cleaning live map may be set to be different or the same as required by the user.

The necessity of the updating of the obstacle live case arises from the changes caused by the mobile obstacle or the temporary obstacle.

The so-called updating may be regarded as the updating of the attribute values corresponding to the layer in the raster map.

The path planning algorithm used during the path planning of the cleaning device in the embodiments of the present disclosure comprises, but is not limited to, DijkStra, A*, JPS, and the like. The purpose is to find the shortest path with the least pollution.

In summary, the current cleaning state of the mopping rag, and the start point and the end point that correspond to the path planning instruction are determined in response to the path planning instruction. The cleaning trajectory from the start point to the end point is determined based on the geographical live map, the cleaning live map, and the cleaning state. During the cleaning task of cleaning device, the path is planned reasonably, which reduces secondary pollution of a road surface as much as possible and improves the cleaning effect.

It needs to be noted that FIG. 8 to FIG. 12 are merely exemplary descriptions, and the method of generating the cleaning trajectory is not limited to the contents described in the above-described embodiments.

FIG. 13 is an exemplary flowchart of a cleaning method according to some embodiments of this specification. In some embodiments, the cleaning method further comprises steps 01 to 07.

At step 01, the target cleaning region is determined.

At step 05, an obstacle in the target cleaning region is marked, and the cleaning action is performed in the target cleaning region with avoiding the obstacle.

At step 06, a state of the obstacle in the target cleaning region is detected, and an obstacle with a changed state is determined.

At step 07, the cleaning action is performed at a position of the obstacle with the changed state.

It needs to be noted that, in the actually dynamic application scene, such as scenes of people walking, pet moving, opening and closing of door, and furniture movement, the execution terminal of the method according to the embodiments of the present disclosure may be a device such as a cleaning device, an automatic cleaner, an intelligent vacuum cleaner, and a robot vacuum cleaner, and is not limited herein. The cleaning device is taken as the execution terminal for description below.

For step 01, it needs to be noted that when performing the cleaning task, the cleaning device first determines the target cleaning region of the cleaning task within the cleaning scene. When encountering the obstacle while determining the target cleaning region, the cleaning device bypasses the detected obstacle and marks the detected obstacle. In the subsequent cleaning process, in response to that the detected obstacle is the dynamic obstacle and has the position movement when the target cleaning region is determined, the cleaning device re-sweeps the region.

For step 05, it needs to be noted that the cleaning device itself has functions of target identification, target segmentation, and target tracking. Through these functions, the robot may mark the obstacle in the target cleaning region when performing the cleaning task. After the current obstacle is marked, the current obstacle is stored in an obstacle set, and then the current obstacle is bypassed by the cleaning device to clean the rest of the target clean region.

For step 06, it needs to be noted that the cleaning device detects a state of a nearby obstacle in real time during each cleaning, and marks the obstacle with the changed state in response to detecting a change in the state of the obstacle, to facilitate its check during next cleaning.

For step 07, it needs to be noted that the cleaning device may sequentially perform steps 01 to 06 in one cleaning task until the cleaning of the current target cleaning region is completed. After the current cleaning task ends, step 07 will be performed, to uniformly traverse the obstacle set and to check whether the state of the obstacle in the obstacle set changes. In response to a change in the state of the obstacle, the cleaning device moves to the position of the obstacle with the changed state to perform the cleaning action.

In addition, the cleaning device may immediately go to the position of the obstacle to perform the cleaning action after finding that a change in the state of the obstacle exists in the current cleaning task. For example, when the cleaning device finds that a change in the state of the obstacle exists immediately after just bypassing the current obstacle, the cleaning device may immediately clean an original position of the current obstacle without waiting for the whole house cleaning to end and then performing supplementary cleaning at that position.

With the cleaning method according to the embodiments of the present disclosure, it is possible to detect a movable obstacle in the target cleaning region during cleaning, and to determine whether the state of the dynamic obstacle changes. By going to the position of the obstacle with the changed state, the cleaning action is performed, which may effectively avoid missed sweeping caused by an object movement, and improve a coverage rate of automatic cleaning in dynamic scenes.

It can be understood that said marking the obstacle in the target cleaning region comprises: marking a position, a type, and a shape of the obstacle in the target cleaning region.

It needs to be noted that when encountering the obstacle, the cleaning device first marks the position of the obstacle and the like in a target cleaning region map, and then may further obtain a type and shape of the obstacle based on a visual perception device and a radar device that are provided on the cleaning device. The type of obstacle is divided into a static obstacle and a dynamic obstacle. The embodiments of the present disclosure mainly focus on the influence of the dynamic obstacle on a cleaning coverage rate. Under a category of the dynamic obstacle, it is divided into many sub-categories, such as furniture, pets, shoes, socks, doors, trash cans, ..., and the like.

In an exemplary embodiment of the present disclosure, the type comprises a dynamic obstacle and a static obstacle, and is used to determine whether the obstacle needs to be detected. Since a position of the static obstacle is generally unchanged, once the position is determined, a region covered by the static obstacle will not be used as the target cleaning region for cleaning. Therefore, although the static obstacle is also marked during marking, a robot does not need to detect a state of the static obstacle, which saves computing power.

The type of the obstacle is generally obtained by collection and processing of the visual perception device. When the visual perception device may be an RGB camera, the cleaning device collects RGB image data of an obstacle on a traveling route of the cleaning device, marks the position of the obstacle, and outputs a type of the currently collected obstacle data through a target identification method. The dynamic obstacle refers to an obstacle that often has existence of a position movement or a changed shape in scenes. The static obstacle refers to an obstacle having a usually unchanged position in scenes, such as a wall and post.

The shape of the obstacle is generally obtained by collection and processing of the radar device. The radar device may be a rotation laser radar. Point cloud information of the obstacle may be collected by the rotation laser radar. The point cloud information comprises a 3D shape of the obstacle. In addition, some pieces of obstacle information are provided and in combination with the visual perception device and the radar device, the type and shape of the obstacle, such as pets, can be comprehensively determined. An action change affects the range of the to-be-cleaned region.

In an exemplary embodiment of the present disclosure, the embodiments of the present disclosure construct an object identification method and adopt a common object detection model based on deep learning as a basic model, such as a convolutional neural network (CNN) model, an R-CNN model, a Fast-RCNN model, and a YOLO network model. A target identification algorithm trains the target detection model by constructing a multi-category training set in the field of household cleaning. Labels in the training set comprise furniture, people, pets, shoes, stools, wires, socks, doors, trash cans, and other common obstacle types in household scenes. By extracting a real-time obstacle depth feature for training, finally, the target identification method according to the embodiments of the present disclosure may output the type of the obstacle according to the visual data.

In addition, it needs to be noted that the door in the obstacle needs to be comprehensively processed in combination with information obtained by the visual perception device and the radar device. Opening or closing of the door is obtained by the visual perception device. It is obtained by the radar device that whether an opening size or closing size of the door is suitable for an entry of the cleaning device. A position and state of the door are obtained. An open state of the door indicates that the cleaning device may enter, and a closed state of the door indicates that the cleaning device may not enter. The door is specially marked in the obstacle because the opening and closing of the door affect the range of the target cleaning region. Therefore, when it is identified that the state of the door is changed from the closed state to the open state at step 06, the cleaning device needs to move to the door and start to re-perform determination work of the target cleaning region starting from step 01.

With the cleaning method according to the embodiments of the present disclosure, the position, type, and shape of the obstacle in the target cleaning region may be marked during cleaning, and the marked obstacle may be stored in the obstacle set. Not all obstacle types in the obstacle set are known. In subsequent detection, when states of some obstacles change, types of these obstacles may be marked as dynamic obstacles in the obstacle set. By marking the dynamic obstacle, with the method according to the embodiments of the present disclosure, the cleaning device may process the position of the dynamic obstacle in a dynamic scene, to avoid missed sweeping

It can be understood that said detecting the state of the obstacle in the target cleaning region, and determining the obstacle with the changed state comprises: detecting a position and a shape of the dynamic obstacle in the target cleaning region; and determining a dynamic obstacle with a changed state based on the dynamic obstacle having a changed position or a changed shape.

It needs to be noted that, in the embodiments of the present disclosure, a check is performed mainly on the dynamic obstacle. The state of the obstacle comprises presence or absence. In particular, for the door, a presence state corresponds to the closed state, and an absence state corresponds to the open state. When the cleaning device performs a cleaning task in the target cleaning region, the cleaning device collects an obstacle state in real time in a perception region of the visual perception device and radar device of the cleaning device. The obstacle state change comprises a position change or a shape change, both of which may cause the obstacle to move away from its original position, causing the obstacle state to change from the presence state to the absence state. When the obstacle state is the absence state, the cleaning device may re-clean a region occupied by the obstacle.

It can be understood that the cleaning action comprises a first cleaning action and a second cleaning action. A first cleaning trajectory determined by performing the first cleaning action is a closed loop, and a second cleaning trajectory determined by performing the second cleaning action is capable of filling the target cleaning region.

It needs to be noted that the first cleaning action may be a cleaning action along edges, and specifically comprises cleaning along a wall or cleaning along an edge of the obstacle, starting from the start point and finally returning to the start point. In this way, the cleaning trajectory forms a closed loop. The second cleaning action may be a cleaning action in a zigzag manner, and specifically comprises that: the cleaning device enters the target cleaning region starting from an original point position and starts to walk forwardly; the cleaning device turns around and walks reversely when reaching the rightmost end of the to-be-cleaned region; the cleaning device turns around and walks forwardly when reaching the leftmost end of the to-be-cleaned region. Finally, after the cleaning action in a zigzag manner ends, the formed second cleaning trajectory fills the first cleaning trajectory formed by the cleaning action along edges.

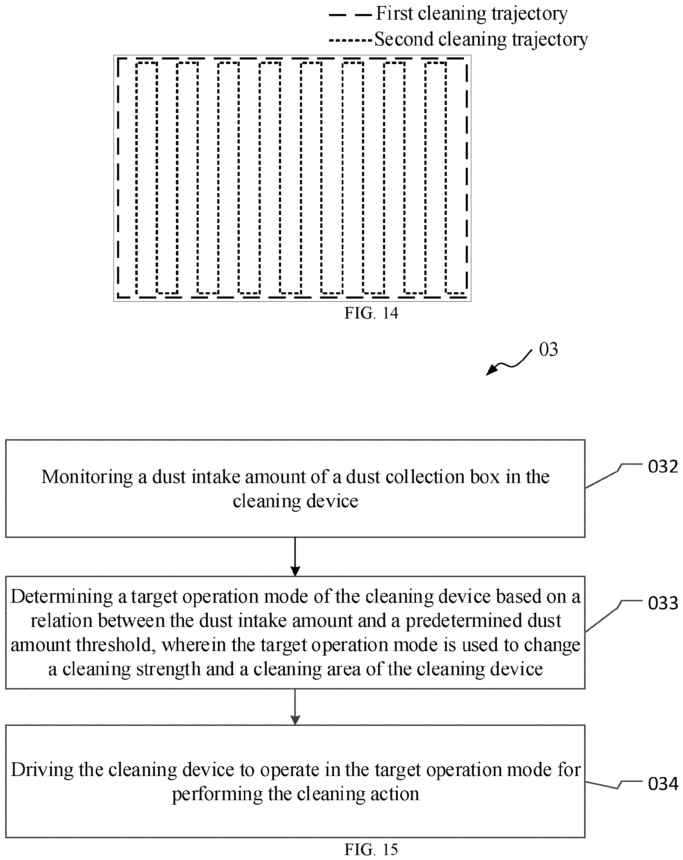

Referring to FIG. 14, it can be understood that in the drawing, when no obstacle exists under an ideal state, there are a first cleaning trajectory and a second cleaning trajectory that are finally formed when the first cleaning action is taken as cleaning along edges and the second cleaning action is taken as cleaning in a zigzag manner.

It can be understood that said determining the target cleaning region comprises: performing the first cleaning action, and determining the target cleaning region based on a cleaning trajectory of the first cleaning action.

It needs to be noted that the cleaning device cleans along walls of an environment for one cycle through the first cleaning action to obtain the target cleaning region. The target cleaning region is a map established for this cleaning task, and a subsequently marked obstacle position is stored in the map in a form of coordinates. For example, the cleaning device performs cleaning along edges along an edge of a rectangular room, resulting in a rectangular target cleaning region.

It can be understood that said performing the cleaning action with avoiding the obstacle in the target cleaning region comprises: performing the second cleaning action in the target cleaning region; and determining that the obstacle is encountered, performing the first cleaning action with avoiding the obstacle and continuing to perform the second cleaning action subsequent to performing the first cleaning action with avoiding the obstacle.

It needs to be noted that after the target cleaning region is determined, the cleaning device performs cleaning in a zigzag manner in the target cleaning region. Once the obstacle is encountered, the cleaning device performs cleaning along edges of the obstacle in a counterclockwise direction, and then continues to perform the cleaning action in a zigzag manner. After the first cleaning action and the second cleaning action are repeatedly performed, except for a region covered by the obstacle, other regions in the target cleaning region are finally cleaned clearly.

It can be understood that the cleaning action is performed at the position of the obstacle with the changed state, which comprises three cases.

A first case is that the obstacle is removed, and that the second cleaning action is performed in the region occupied by the obstacle. In an exemplary embodiment of the present disclosure, supplementary cleaning is performed in a targeted zigzag manner for real-time changes of the obstacle, without the need to re-sweep the whole house, which improves the cleaning efficiency.

A second case is that the obstacle moves slightly, and that the first cleaning action is performed in the region occupied by the obstacle. In response to the position of the obstacle moving slightly and the originally covered obstacle region being not completely exposed, at this time, the first cleaning action may be performed to perform supplementary cleaning on the exposed region.

A third case is that the original obstacle is removed, but there are other obstacles. At this time, it is necessary to combine the first cleaning action and the second cleaning action. For example, cleaning along the edges is performed first to determine a new obstacle boundary, and then an uncleaned target cleaning region between an original boundary and a current boundary is cleaned in a zigzag manner.

It needs to be noted that the second cleaning action is performed in the region occupied by the obstacle with the changed state.

It can be understood that when the obstacle is encountered, the present disclosure optimizes the first cleaning trajectory and the second cleaning trajectory by using the path planning algorithm based on the first cleaning action and the second cleaning action, and avoids repeated cleaning as much as possible.

Exemplarily, a control process of the cleaning device performing the cleaning method is implemented in steps 201 to 203.

At step 201, the cleaning device performs cleaning along edges on the edge of the target cleaning region.

At step 202, the cleaning device performs cleaning in a zigzag manner in the target cleaning region and performs cleaning along edges in response to the cleaning device encountering the obstacle.

At step 203, in steps 201 and 202, a movable obstacle oi is recorded in an obstacle set O.

The movable obstacle is divided into three cases.

In case a, in response to the movable obstacle being an obstacle visible to the laser radar, the position of the obstacle and the point cloud information are recorded.

In case b, in response to the movable obstacle being an obstacle identified by the RGB camera, the position and type of the obstacle are recorded.

In case c, in response to the movable obstacle being a door, the open state and closed state of the door are recorded.

At step 204, step 202 and step 203 are repeated until the cleaning of the target cleaning region is completed.

At step 205, navigation traversal is performed on the obstacle in O to detect whether the obstacle still exists, and the detection method is as follows.

At step e, for the obstacle detected by the laser radar, it is checked that whether the point cloud information exists.

At step f, for the obstacle detected by the RGB camera, it is checked that whether the position of the obstacles moves.

At step 206, in response to no obstacle detected in step 205, cleaning in a zigzag manner is performed on the region occupied by the obstacle once.

It needs to be noted that in the above control process, the cleaning task is divided into first cleaning and second cleaning. First cleaning is traditionally normal cleaning, but the position and state of the dynamic obstacle need to be marked. Second cleaning is to check and perform complementary cleaning on a movable obstacle region. Through the above method, not only can efficiency and a success rate of obstacle avoidance in the first cleaning be improved, but a coverage rate in the second cleaning can also be improved.

It needs to be noted that FIG. 13 and FIG. 14 are merely exemplary descriptions, and the method of generating the cleaning trajectory is not limited to the contents described in the above-described embodiments.

FIG. 15 is an exemplary flowchart of performing a cleaning action according to some embodiments of this specification. In some embodiments, step 03 in FIG. 1 may be performed based on steps 032 to 034 in FIG. 15.

At step 032, a dust intake amount of a dust collection box in the cleaning device is monitored.

At step 034, a target operation mode of the cleaning device is determined based on a relation between the dust intake amount and a predetermined dust amount threshold. The target operation mode is used to change a cleaning strength and a cleaning area of the cleaning device.

At step 035, the cleaning device is driven to operate in the target operation mode for performing the cleaning action.

Further, the present disclosure may correspondingly adjust cleaning functions for characterizing an operation mode such as a width of an adjacent cleaning path of the cleaning device, a number of cleaning times of the adjacent cleaning path, and the rotational speed of the motor according to a dirtiness degree in the current cleaning region.

In one way, for example, when the current region is determined to be dirtier, the rotational speed of the dust absorption motor is improved. And/or when the current region is determined to be dirtier, it is determined that the width of the adjacent cleaning path is narrower. In this way, a width of a path overlapping region is higher, and the cleaning effect is better. And/or, when the current region is determined to be dirtier, the adjacent path may be cleaned repeatedly a plurality of times to further improve the cleaning effect.

In an exemplary embodiment of the present disclosure, in the present disclosure, when it is detected that the dust intake amount of the dust collection box is greater than the predetermined dust amount threshold, the current cleaning region of the cleaning device may be considered to be a dirty region. Further, it is necessary to adjust the cleaning device to operate the cleaning device in a target operation mode with a high cleaning strength and a large cleaning area. When it is detected that the dust intake amount of the dust collection box is smaller than the predetermined dust amount threshold, the current cleaning region of the cleaning device may be considered to be a non-dirty region. Further, it is necessary to adjust the cleaning device to operate the cleaning device in a target operation mode with a middle and low cleaning strength and a smaller cleaning area.

It needs to be noted that the present disclosure does not specifically limit the predetermined dust amount threshold. For example, the predetermined dust amount may be 5g, 10g, or the like.

Further, in the present disclosure, after the target operation mode for characterizing the cleaning strength and the cleaning area is determined, the cleaning device may be driven to perform the cleaning function in the target operation mode.

For example, the rotational speed of the dust absorption motor of the cleaning device may be controlled according to a dirtiness degree of the floor. It can be understood that for a region with a light dirtiness degree, the dust absorption motor is set at a low rotational speed. For a region with a heavy dirtiness degree, the dust absorption motor is set at a high speed. In this way, not only is the cleaning effect ensured, but power consumption is also lowered, and a work time of the cleaning device is prolonged.

Alternatively, the present disclosure may control a path overlapping width of a traveling route and a number of round-trip cleaning times of the cleaning device according to the dirtiness degree of the floor. In this way, the cleaning effect can be strengthened, and a cleaning quality is further ensured.

In one way, only an operation mode with a general cleaning strength and cleaning area needs to be performed for a region where the dirtiness degree of the ground is not serious. In this way, not only is the cleaning effect ensured, but the cleaning efficiency is also ensured.

In this implementation, the dust intake amount of the dust collection box in the cleaning device is monitored. A target operation mode of the cleaning device is determined based on a relation between the dust intake amount and a predetermined dust amount threshold. The target operation mode is used to change a cleaning strength and a cleaning area of the cleaning device. The cleaning device is driven to operate in the target operation mode. By applying the technical solutions of the present disclosure, the cleaning strength and the cleaning area of the cleaning device may be adjusted correspondingly according to the detected dust intake amount of the dust collection box of the cleaning device. Therefore, it is realized that the robot is operated by cleaning at a high strength in a dirty region and cleaning at a low strength in a normal region. Further, not only can a cleaning effect for the dirty region be ensured, but a problem of not high cleaning efficiency for a specific region caused by always performing cleaning with a same cleaning strength and a same cleaning area, which exists in the related art, is also avoided.

In another exemplary embodiment of the present disclosure, in a possible implementation of the present disclosure, step 033 further comprises steps 0331 and 0332.

At step 0331, in response to detecting that the dust intake amount is greater than the predetermined dust amount threshold, the target operation mode is determined for controlling the cleaning device to perform a cleaning function with a first cleaning strength and a first cleaning area.

At step 0332, in response to detecting that the dust intake amount is smaller than or equal to the predetermined dust amount threshold, the target operation mode is determined for controlling the cleaning device to perform the cleaning function with a second cleaning strength and a second cleaning area. The second cleaning strength is lower than the first cleaning strength, and the second cleaning area is smaller than the first cleaning area.

First, it needs to be noted that the cleaning strength in the present disclosure may correspond to a variety of cleaning operation parameters. For example, the cleaning strength may comprise the rotational speed of the dust absorption motor of the cleaning device. It can be understood that the higher the rotational speed of the dust absorption motor, the higher the cleaning strength of the cleaning device.

Alternatively, the cleaning strength may also comprise a number of repeated cleaning times of the cleaning device. It can be understood that the greater the number of repeated cleaning times, the greater the cleaning strength of the cleaning device. Alternatively, the cleaning strength may also comprise a traveling interval on a cleaning route of the cleaning device. It can be understood that the narrower the traveling interval, the higher the cleaning strength of the cleaning device.

In addition, for the cleaning area, the cleaning area of the cleaning device may be controlled according to the dirtiness degree of the ground. It can be understood that the higher the dirtiness degree of the ground, the larger the set cleaning area. For the region where the dirtiness degree of the ground is not serious, only a general cleaning area needs to be set.

For example, the predetermined dust amount threshold of 5g is taken as an example. When the cleaning device determines that a current dust intake amount is greater than 5g by monitoring the dust collection box, it may be determined that the current cleaning region is the dirty region on the floor. In this way, it is determined that the region is the high cleaning region. Further, the present disclosure may select a target operation mode in which the cleaning function is performed with a high cleaning strength (i.e., the first cleaning strength) and a large cleaning area (i.e., the first cleaning area) according to a predetermined control strategy.

The target operation mode corresponding to the high cleaning strength and the high cleaning area may be that the rotational speed of the dust absorption motor reaches 500 Revolutions Per Minute (rpm), a distance between two adjacent traveling routes is a traveling interval of 1 cm, the number of repeated cleaning times is 5 times, and the cleaning area is 1 square meter. In this way, after selecting the target operation mode, the cleaning device subsequently performs the cleaning function with the rotational speed of the dust absorption motor, the traveling interval, the cleaning area, and the number of repeated cleaning times that are represented by the target operation mode.

For another example, the predetermined dust amount threshold of 5g is also taken as an example. When the cleaning device determines that the current dust intake amount is smaller than 5g (for example, the current dust intake amount is 3g) by monitoring the dust collection box, it may be determined that the current cleaning region is a region with a general dirtiness degree on the floor. In this way, it is determined that the region is a medium cleaning area. Further, the present disclosure may select a target operation mode in which the cleaning function is performed with a medium cleaning strength (i.e., the second cleaning strength) and a medium cleaning area (i.e., the second cleaning area) according to the predetermined control strategy.

The target operation mode corresponding to the medium cleaning strength and medium cleaning area may be that the rotational speed of the dust absorption motor reaches 300 rpm, the distance between the two adjacent traveling routes is a traveling interval of 2 cm, the number of repeated cleaning times is 3 times, and the cleaning area is 0.8 square meter. In this way, after selecting the target operation mode, the cleaning device subsequently performs the cleaning function with the rotational speed of the dust absorption motor, the traveling interval, the cleaning area, and the number of repeated cleaning times that are represented by the target operation mode.

For another optional example, the predetermined dust amount threshold of 5g is also taken as an example. When the cleaning device determines that the current dust intake amount is smaller than 5g (for example, the current dust intake amount is 0.5g) by monitoring the dust collection box, it may be determined that the current cleaning region is the clean region. In this way, it is determined that the region is a low cleaning region. Further, the present disclosure may select a target operation mode in which the cleaning function is performed with a low cleaning strength (i.e., the second cleaning strength) and a low cleaning area (i.e., the second cleaning area) according to the predetermined control strategy.

The target operation mode corresponding to the low cleaning strength and the low cleaning area may be that the rotational speed of the dust absorption motor reaches 100 rpm, the distance between the two adjacent traveling routes is a traveling interval of 5 cm, the number of repeated cleaning times is 1 times, and the cleaning area is 0.3 square meter. In this way, after selecting the target operation mode, the cleaning device subsequently performs the cleaning function with the rotational speed of the dust absorption motor, the traveling interval, the cleaning area, and the number of repeated cleaning times that are represented by the target operation mode.

In another exemplary embodiment of the present disclosure, in a possible implementation of the present disclosure, the step of in response to detecting that the dust intake amount is greater than the predetermined dust amount threshold, determining the target operation mode for controlling the cleaning device to perform a cleaning function with a first cleaning strength and a first cleaning area further comprises: determining that the dust intake amount is greater than the predetermined dust amount threshold, and recording a position where the cleaning device is located; and marking a region within a predetermined range from the position as the high cleaning region, and controlling the cleaning device to perform the cleaning function with the first cleaning strength and the first cleaning area in the high cleaning region.

In one way, in the present disclosure, when the cleaning device determines that the current dust intake amount is greater than the predetermined dust amount threshold by monitoring the dust collection box, in order to ensure that the cleaning device operates with the first cleaning strength and the first cleaning area, in the operation range of the cleaning function that is the dirty region, the present disclosure needs to first determine the position where the dirty region is located.

In an exemplary embodiment of the present disclosure, the position where the cleaning device is currently located needs to be recorded first. For example, a coordinate point is a center point of a bedroom A. Further, a region within a predetermined range (for example, having a radius of 50 cm) from a center point position may be marked as the high cleaning region. In this way, the cleaning function is subsequently performed with the first cleaning strength and the first cleaning area in the high cleaning region (i.e., a region having a radius of 50 cm with the center point of the bedroom A as an original point). Therefore, it is ensured that the target operation mode of the cleaning device is to act on the dirty region.

It needs to be noted that the present disclosure does not specifically limit the predetermined range. For example, the predetermined range may have a radius of 50 cm, a radius of 100 cm, or the like.

In another exemplary embodiment of the present disclosure, in a possible implementation of the present disclosure, in step 5103 (of driving the cleaning device to operate in the target operation mode), the method further comprises: determining at least one of a rotational speed of a dust absorption motor, a traveling interval, a cleaning area, and a number of repeated cleaning times that are represented by the target operation mode; and driving the cleaning device to perform a cleaning function with the at least one of the rotational speed of the dust absorption motor, the traveling interval, the cleaning area, and the number of repeated cleaning times. The traveling interval reflects a distance between two adjacent traveling routes of the cleaning device.

Further, the present disclosure may correspondingly adjust the cleaning function for characterizing the operation mode such as the width of the adjacent cleaning path of the cleaning device, the number of cleaning times of the adjacent cleaning path, and the rotational speed of the motor (one or more of them) according to the dirtiness degree in the current cleaning region.

In one way, for example, when it is determined that the current region is dirtier, the rotational speed of the dust absorption motor is improved. And/or when it is determined that the current region is dirtier, it is determined that the width of the adjacent cleaning path is narrower. In this way, the width of the path overlapping region is higher, and the cleaning effect is better. And/or, when it is determined that the current region is dirtier, the adjacent path may be cleaned repeatedly the plurality of times to further improve the cleaning effect.

In an exemplary embodiment of the present disclosure, in the present disclosure, when it is detected that the dust intake amount of the dust collection box is greater than the predetermined dust amount threshold, the current cleaning region of the cleaning device may be considered to be the dirty region. Further, it is necessary to drive the cleaning device to operate the cleaning device in the target operation mode with the high cleaning strength and the large cleaning area. When it is detected that the dust intake amount of the dust collection box is smaller than the predetermined dust amount threshold, the current cleaning region of the cleaning device may be considered to be the non-dirty region. Further, it is necessary to drive the cleaning device to be operated in the target operation mode with the middle and low cleaning strength and the smaller cleaning area.

By way of further example, for example, in response to detecting that the dust intake amount is greater than a predetermined dust amount threshold 1, the target operation mode may be determined for controlling the cleaning device to perform the cleaning function with the first cleaning strength and the first cleaning area.

When it is detected that the dust intake amount is smaller than or equal to the predetermined dust amount threshold 1 but greater than or equal to a predetermined dust amount threshold 2, the target operation mode may be determined for controlling the cleaning device to perform the cleaning function with the second cleaning strength and the second cleaning area. Then, when it is detected that the dust intake amount is smaller than or equal to a predetermined dust amount threshold 3, the target operation mode may be determined for controlling the cleaning device to perform the cleaning function with a third cleaning strength and a third cleaning area.

It can be understood that the predetermined dust amount threshold 1 is greater than the predetermined dust amount threshold 2, and the predetermined dust amount threshold 2 is greater than the predetermined dust amount threshold 3. The specific numerical value can be set according to the actual situation, and the present disclosure is not limited thereto.

In another exemplary embodiment of the present disclosure, for driving the cleaning device to perform the cleaning function with the traveling interval, it specifically comprises: determining an initial interval between two adjacent current traveling routes of the cleaning device; adjusting the initial interval to a target interval with a smaller distance; and driving the cleaning device to perform the cleaning function with a distance between two adjacent traveling routes being the target interval.

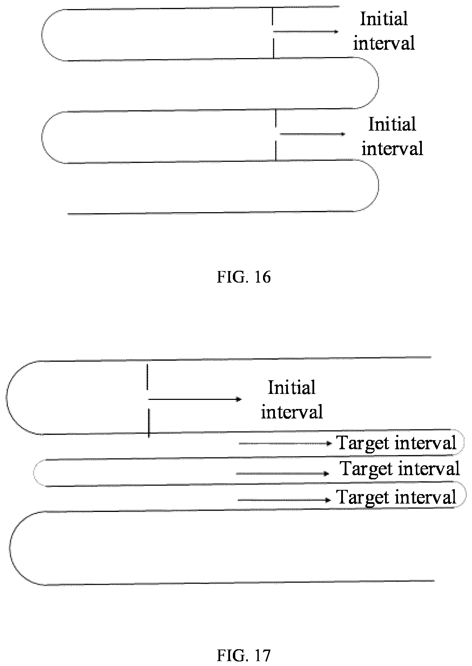

As shown in FIG. 16, it is the initial interval between the two adjacent traveling routes of the current cleaning device in the initial operation mode. It can be seen that it is also traveling in a normal zigzag manner. Moreover, an initial interval between each two adjacent traveling routes is large. This also results in a small cleaning overlapping region of the cleaning device, resulting in a not high cleaning strength.

In view of the above problems, as shown in FIG. 17, the present disclosure may adjust the initial interval to the target interval with a smaller distance. In this way, it is realized that the initial interval between each two adjacent traveling routes is smaller when the cleaning device travels in a zigzag manner. Further, the purpose of strengthening the cleaning strength brought by more cleaning overlapping regions is achieved.

In another exemplary embodiment of the present disclosure, in a possible implementation of the present disclosure, step 033 further comprises steps 0333 and 0334.

At step 0333, in response to detecting that the dust intake amount is greater than the predetermined dust amount threshold, a camera device of the cleaning device is activated.

At step 0334, a region image in a traveling direction of the cleaning device is collected by using the camera device.

The target operation mode of the cleaning device is determined based on an identification result of the region image and the relation between the dust intake amount and the predetermined dust amount threshold.

Further, in the present disclosure, in order to determine a target operation mode that is more matched with the dirty region, it is also possible to collect the region image in the traveling direction of the cleaning device in combination with the use of the camera device. Moreover, the identification result of the region image is used to assist in determining the target operation mode of the cleaning device subsequently.

It can be understood that through the identification of the region image, it is possible to determine a type of to-be-cleaned objects existing in the region where the cleaning device is currently located (for example, whether the to-be-cleaned object is dust or oil stains, or the like). Therefore, according to different types of to-be-cleaned objects, target operation modes with different cleaning strengths and cleaning areas are selected.

In another exemplary embodiment of the present disclosure, the method further comprises, subsequent to collecting the region image in the traveling direction of the cleaning device by using the camera apparatus: identifying a region object feature in the region image by using a predetermined image detection model; and determining the identification result of the region image based on the region object feature. The region object feature comprises at least one of a size feature, a color feature, or a contour feature. The identification result reflects a to-be-cleaned object in a region where the cleaning device is currently located.

In an exemplary embodiment of the present disclosure, in the present disclosure, an image of a region in a forward traveling direction may be captured by a camera collection device provided on the robot, to obtain the region image, and the region image is inputted to a pre-generated image detection model to determine an object feature in the region image. In this way, the to-be-cleaned object matching with the object feature is selected in a predetermined object feature set subsequently.

The present disclosure does not specifically limit the image detection model. For example, the image detection model may be convolutional neural networks (CNN). CNNs are a type of feedforward neural networks (FNNs) that contain convolutional computation and have a deep structure, and are one of representative algorithms for deep learning. CNNs have a representation learning ability and are able to classify input information in a translation-invariant manner according to a hierarchical structure of the input information. Because of a powerful feature representation ability of the CNN on the image, the CNN has achieved impressive results in the fields of image classification, target detection, semantic segmentation, and the like.

Further, the present disclosure may use the neural network models, such as CNN, to extract feature information (i.e., the region object feature) of the to-be-cleaned object existing in the region image, and further to identify features of the region image (comprising, for example, a size feature, a color feature, a contour feature, a texture feature, and the like corresponding to the to-be-cleaned object). In this way, the to-be-cleaned object to which the features belong is determined.

In some embodiments, according to the embodiments of the present disclosure, the region image may be inputted to a predetermined CNN model, and an output of a final fully connected layer (FC) of the CNN model is taken as an identification result for feature data corresponding to the region object feature of the region image.

In another exemplary embodiment of the present disclosure, in a possible implementation of the present disclosure, step 032 further comprises step 0321.

At step 0321, a dust intake amount at an inlet of the dust collection box is monitored within a predetermined time period; or a weight change condition of the dust collection box is monitored within a predetermined time period.

First, the present disclosure does not specifically limit the predetermined time period. For example, the predetermined time period may be 1 minute or 30 seconds. In an exemplary embodiment of the present disclosure, the cleaning device may determine through an increase in a weight of the dust box (or dust intake at the inlet of the dust collection box) over a period of time. The larger the weight, the more serious the dirtiness.

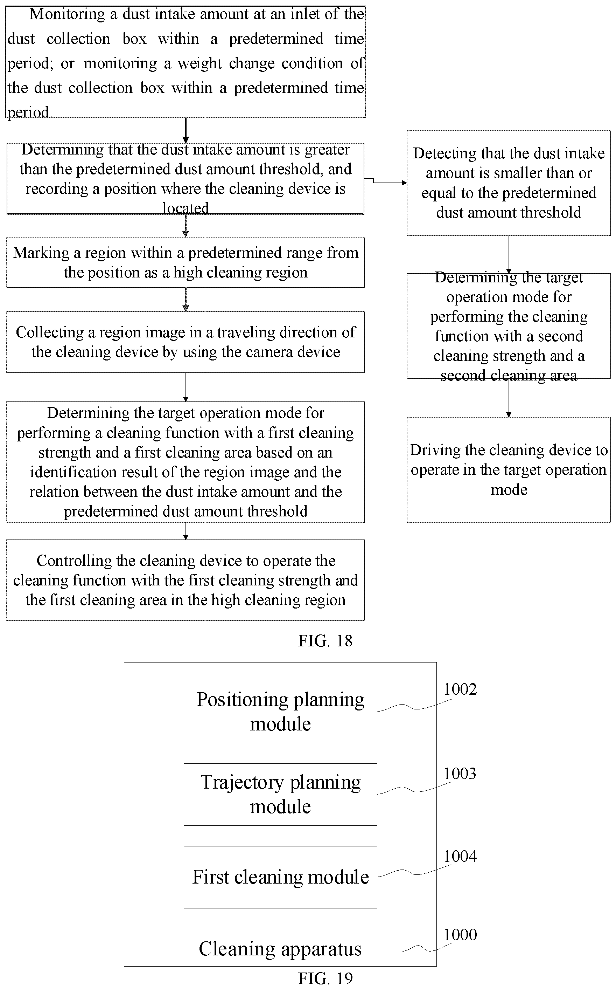

In one way, as illustrated in FIG. 18, provided is a flowchart of an operational cleaning method for a cleaning robot in the present disclosure, comprising: monitoring a dust intake amount of a dust collection box in the cleaning device; determining a target operation mode of the cleaning device based on a relation between the dust intake amount and a predetermined dust amount threshold; the target operation mode being used to change a cleaning strength and a cleaning area of the cleaning device; and driving the cleaning device to operate in the target operation mode.

By applying the technical solutions of the present disclosure, the cleaning strength and the cleaning area of the cleaning device may be adjusted correspondingly according to the detected dust intake amount of the dust collection box of the cleaning device. Therefore, it is realized that the robot is operated by cleaning at a high strength in the dirty region and cleaning at a low strength in the normal region. Further, not only can the cleaning effect for the dirty region be guaranteed, but the problem, which exists in the related art, of not high cleaning efficiency for the specific region caused by always performing cleaning with the same cleaning strength and the same cleaning area is also avoided.

FIG. 19 is a schematic block diagram of a cleaning apparatus according to an embodiment of the present disclosure. The cleaning apparatus 1000 comprises a positioning planning module 1002 configured to determine a target cleaning region, a trajectory planning module 1003 configured to generate a cleaning trajectory in the target cleaning region in response to a path planning instruction, and a cleaning module 1004 configured to perform a cleaning action along the cleaning trajectory.

In some implementations, the positioning planning module 1002 is configured to determine a target cleaning region of the cleaning device in response to identifying that the cleaning device is activated at a non-charging position subsequent to activating the cleaning device.

In this embodiment, the cleaning device is activated at the non-charging position, which means that the user moves the cleaning device to a certain position and manually activates the cleaning device. At this time, the cleaning device is in a local cleaning operation mode.

In an exemplary embodiment of the present disclosure, after the cleaning device is activated, the positioning planning module 1002 first identifies whether the position at which the cleaning device is activated is the non-charging position. In an exemplary embodiment of the present disclosure, after the cleaning device is in the activating state, the position identification component on the cleaning device is also activated accordingly. The position identification component is capable of detecting whether the cleaning device is at the charging position, and the positioning planning module 1002 may determine whether the position at which the cleaning device is activated is the non-charging position based on the identification result of the position identification component.

Further, in the case where the positioning planning module 1002 determines that the cleaning device is activated at the non-charging position, i.e., in the case where the cleaning device is moved to a certain position and manually activated, the positioning planning module 1002 needs to determine the target cleaning region needing to be cleaned by the cleaning device.

In an exemplary embodiment of the present disclosure, in response to the positioning planning module 1002 determining that the cleaning device is activated at the non-charging position, it indicates that the cleaning device is in the local cleaning mode. At this time, it may be determined that the cleaning intention of the user is to clean a certain range. Therefore, the positioning planning module 1002 needs to determine the target cleaning region, to accurately perform cleaning based on the cleaning intention of the user in the subsequent step.

In an exemplary embodiment of the present disclosure, the cleaning device is provided with the detection component for detecting the case in the vicinity of the position where the cleaning device is located. The cleaning device stores the semantic map of all the scenes. The positioning planning module 1002 may analyze the cleaning intention of the user based on the detection result of the detection component and/or the semantic map described above, and further determine the target cleaning region of the cleaning device based on the cleaning intention of the user.

In this embodiment, the positioning planning module 1002 first determines whether the cleaning device is in the state where the cleaning device is activated at the non-charging position. When the cleaning device is in the state where the cleaning device is activated at the non-charging position, the region that the user wants to clean (i.e., the above-described target cleaning region) is determined by the positioning planning module 1002. In the embodiments of the present disclosure, when the positioning planning module 1002 determines that the cleaning device is in the state where the cleaning device is activated at the non-charging position, the positioning planning module 1002 may automatically analyze the cleaning intention of the user and determine the region that the user wants to clean.

In the above-described embodiment, the positioning planning module 1002 is further configured to identify whether the first cleaning target exists in the region having the predetermined distance from the cleaning device, and determine the region where the first cleaning target is located as the target cleaning region in response to the first cleaning target existing in the region having the predetermined distance from the cleaning device.

In this embodiment, the predetermined distance is used to indicate the distance that is identifiable by the detection component of the cleaning device, and may also be the self-defined distance. It can be understood that the self-defined distance needs to be within the range of the distance that is identifiable by the detection component of the cleaning device. The above-described first cleaning target is used to indicate stains or garbage that are not easily cleaned.

In an exemplary embodiment of the present disclosure, the process of determining the target cleaning region of the cleaning device is that the positioning planning module 1002 first identifies whether the first cleaning target exists in the region having the predetermined distance from the cleaning device. In an exemplary embodiment of the present disclosure, when the cleaning device is provided with the detection component capable of detecting the case in the vicinity of the position where the cleaning device is located, the positioning planning module 1002 may identify the case in the vicinity of the position where the cleaning device is located by the detection component, i.e., identify whether the first cleaning target exists in the vicinity of the cleaning device.

Exemplarily, the detection component may be one of an Al (image) identification device, a camera, a vidicon, and the like, but is not limited thereto.

Further, when the positioning planning module 1002 determines that the first cleaning target exists in the region having the predetermined distance from the cleaning device, the positioning planning module 1002 determines the region where the first cleaning target is located as the region that the user wants to clean, i.e., determines the region where the first cleaning target is located as the target cleaning region.

In an exemplary embodiment of the present disclosure, in response to the positioning planning module 1002 identifying that the first cleaning target exists in the region having the predetermined distance from the cleaning device, it indicates that the cleaning intention of the user is to clean the first cleaning target. At this time, the positioning planning module 1002 determines the region where the first cleaning target is located as the target cleaning region described above. In this way, the cleaning apparatus only controls the cleaning device to clean the region where the first cleaning target is located in the subsequent step, which makes the cleaning region of the cleaning device more in line with the user's requirements.

In this embodiment, when identifying that the first cleaning target exists in the region having the predetermined distance from the cleaning device, the positioning planning module 1002 determines the region where the first cleaning target is located as the target cleaning region, i.e., determines the region where the first cleaning target is located as the region that the user wants to clean.

In the above embodiments, the cleaning apparatus 1000 of the cleaning device further comprises an obtaining module configured to obtain the semantic map of all the scenes established by the cleaning device. The positioning planning module 1002 is further configured to determine the target cleaning region based on the semantic map.

In this embodiment, the semantic map is used to indicate the semantic map of all the scenes established by the cleaning device after the cleaning device cleans all the scenes. All the scenes are used to indicate scenes of all rooms of the user's house. The semantic map specifically comprises a type of room, a position and type of items such as household appliances and furniture, and the like.

In an exemplary embodiment of the present disclosure, the process of determining the target cleaning region of the cleaning device is that the semantic map established by the cleaning device after the cleaning device cleans all the scenes is first obtained by the obtaining module. In an exemplary embodiment of the present disclosure, after cleaning all the rooms in the user's house for the first time, the cleaning device establishes the semantic map of all the scenes in the user's house, updates the semantic map based on actual situations after each cleaning, and stores the updated semantic map in a storage unit of the cleaning device. The obtaining module may obtain the semantic map through the storage unit. In addition, the obtaining module obtains a semantic map updated after the latest cleaning. In this way, the accuracy of the target cleaning region determined by the positioning planning module 1002 based on the semantic map in the subsequent step is ensured.

Further, the positioning planning module 1002 determines the target cleaning region based on the semantic map, i.e., determines the region that the user wants to clean based on the semantic map. In an exemplary embodiment of the present disclosure, based on the semantic map, the type of the room where the cleaning device is currently located may be determined, and it may be determined that whether furniture, household appliances, or the like exist at the position where the cleaning device is currently located. The cleaning intention of the user may be analyzed based on the information. The region that the user wants to clean may be determined based on the cleaning intention of the user. Therefore, the positioning planning module 1002 may determine the target cleaning region based on the semantic map.

In this embodiment, when it is determined that the cleaning device is in the state where the cleaning device is activated at the non-charging position, i.e., in response to the cleaning device activating the local cleaning mode, the obtaining module may obtain the semantic map established by the cleaning device, and the positioning planning module 1002 analyzes the case near the position where the cleaning device is currently located based on the semantic map, i.e., analyzes the cleaning intention of the user, and then determines the target cleaning region based on the cleaning intention of the user, which ensures that the region cleaned by the cleaning device in the subsequent step is the region that the user wants to clean, enabling the cleaning region of the cleaning device to be more in line with the user's requirements. In this way, the cleaning efficiency of the cleaning device is improved, and the user's satisfaction degree is improved.

In the above-described embodiment, the positioning planning module 1002 is further configured to determine, in response to determining that the cleaning device is in a predetermined type of room based on the semantic map, the predetermined type of room as the target cleaning region.

In this embodiment, the predetermined type of room is used to indicate a room that is not easily cleaned or easily messy, such as a bathroom or a kitchen.

In an exemplary embodiment of the present disclosure, the process of determining the target cleaning region based on the semantic map is that the positioning planning module 1002 first analyzes whether the type of the room of the position where the cleaning device is currently located is the predetermined type of room based on the semantic map.

Further, in the case where the positioning planning module 1002 determines that the type of the room of the position where the cleaning device is currently located is the predetermined type of room, the positioning planning module 1002 determines the room as the region that the user wants to clean, i.e., determines the room as the target cleaning region.

In an exemplary embodiment of the present disclosure, in response to the positioning planning module 1002 analyzing that the type of the room of the position where the cleaning device is currently located is the predetermined type of room based on the semantic map, it indicates that the cleaning intention of the user is to clean the predetermined type of room. At this time, the cleaning apparatus determines the predetermined type of room (, i.e., the room where the cleaning device is currently located) as the target cleaning region.

In this embodiment, the positioning planning module 1002 analyzes that the position where the cleaning device is currently located is the predetermined type of room based on the semantic map, the positioning planning module 1002 determines the predetermined type of room as the region that the user wants to clean, i.e., determines the predetermined type of room as the target cleaning region.

In the above-described embodiment, the positioning planning module 1002 is further configured to determine, in response to determining that the cleaning device is not in the predetermined type of room and that the second cleaning target exists in the region having the predetermined distance from the cleaning device based on the semantic map, the region where the second cleaning target is located as the target cleaning region.

In this embodiment, the above-described second cleaning target is used to indicate household appliances or households, such as beds, teapoys, washing machines, and the like, in the user's house that are likely to interrupt the cleaning process of the cleaning device.

In an exemplary embodiment of the present disclosure, the process of determining the target cleaning region based on the semantic map is that, in response to analyzing that the type of the room of the position where the cleaning device is currently located is not the predetermined type of room based on the semantic map, the positioning planning module 1002 analyzes whether the second cleaning target exists in the region having the predetermined distance from the cleaning device based on the semantic map. In an exemplary embodiment of the present disclosure, since position information of the second cleaning target may be specified based on the semantic map, the positioning planning module 1002 may determine whether the second cleaning target exists in the region having the predetermined distance from the cleaning device based on the semantic map without the need to invoke the detection component of the cleaning device to detect the case in the vicinity of the cleaning device.

Further, when the positioning planning module 1002 analyzes that the second cleaning target exists in the region having the predetermined distance from the cleaning device based on the semantic map, the positioning planning module 1002 determines the region where the second cleaning target is located as the region that the user wants to clean, i.e., determines the region where the second cleaning target is located as the target cleaning region.

In an exemplary embodiment of the present disclosure, in response to the positioning planning module 1002 analyzing, based on the semantic map, that the type of the room of the position where the cleaning device is currently located is not the predetermined type of room, and that the second cleaning target exists in the region having the predetermined distance from the cleaning device, it indicates that the cleaning intention of the user is to clean the region where the second cleaning target is located. At this time, the cleaning apparatus determines the region where the second cleaning target is located as the target cleaning region. In this way, the first cleaning module 1004 only controls the cleaning device to clean the region where the second cleaning target is located in the subsequent step, enabling the cleaning region of the cleaning device to be more in line with the user's requirements.

In this embodiment, when the positioning planning module 1002 analyzes, based on the semantic map, that the position where the cleaning device is currently located is not the predetermined type of room, and that the second cleaning target exists in the region having the predetermined distance from the cleaning device, the positioning planning module 1002 determines the region where the second cleaning target is located as the region that the user wants to clean, i.e., determines the region where the second cleaning target is located as the target cleaning region. In this way, in the subsequent step, the first cleaning module 1004 only controls the cleaning device to clean the region where the second cleaning target is located. Therefore, the cleaning region of the cleaning device is more in line with the user's requirements, the cleaning efficiency of the cleaning device is improved, and the user's satisfaction degree is improved.

In the above-described embodiment, the positioning planning module 1002 is further configured to determine, in response to determining that the cleaning device is not in the predetermined type of room and that no second cleaning target exists in the region having the predetermined distance from the cleaning device based on the semantic map, the region having the predetermined distance from the cleaning device as the target cleaning region.

In this embodiment, the process of determining the target cleaning region based on the semantic map is that the positioning planning module 1002 first analyzes whether the type of the room of the position where the cleaning device is currently located is the predetermined type of room based on the semantic map, and whether the second cleaning target exists in the region having the predetermined distance from the cleaning device.

In an exemplary embodiment of the present disclosure, when the positioning planning module 1002 analyzes, based on the semantic map, that the type of the room of the position where the cleaning device is currently located is not the predetermined type of room, and that the second cleaning target exists in the region having the predetermined distance from the cleaning device, the positioning planning module 1002 determines the region having the predetermined distance from the cleaning device as the region that the user wants to clean, i.e., determines the region having the predetermined distance from the cleaning device as the target cleaning region.

In an exemplary embodiment of the present disclosure, in response to the positioning planning module 1002 analyzing, based on the semantic map, that the type of the room of the position where the cleaning device is currently located is not the predetermined type of room, and that no second cleaning target exists in the region having the predetermined distance from the cleaning device, it indicates that the cleaning intention of the user is to clean the region having the predetermined distance from the cleaning device. At this time, the cleaning apparatus determines the region having the predetermined distance from the cleaning device as the target cleaning region. In this way, the first cleaning module 1004 only controls the cleaning device to clean the region having the predetermined distance from the cleaning device in the subsequent step, enabling the cleaning region of the cleaning device to be more in line with the user's requirements.

In this embodiment, when analyzing, based on the semantic map, that the position where the cleaning device is currently located is not the predetermined type of room, and that no second cleaning target exists in the region having the predetermined distance from the cleaning device, the positioning planning module 1002 determines the region having the predetermined distance from the cleaning device as the region that the user wants to clean, i.e., determines the region having the predetermined distance from the cleaning device as the target cleaning region. In this way, in the subsequent step, the first cleaning module 1004 only controls the cleaning device to clean the region having the predetermined distance from the cleaning device, enabling the cleaning region of the cleaning device to be more in line with the user's requirements. Therefore, the cleaning efficiency of the cleaning device is improved, and the user's satisfaction degree is improved.

In the above-described embodiment, the positioning planning module 1002 is further configured to identify whether the first cleaning target exists in the region having the predetermined distance from the cleaning device, and determine to perform the step of determining the target cleaning region based on the semantic map in response to no first cleaning target existing in the region having the predetermined distance from the cleaning device.

In this embodiment, before the positioning planning module 1002 determines the target cleaning region based on the semantic map, the positioning planning module 1002 further needs to identify whether the first cleaning target exists in the region having the predetermined distance from the cleaning device. In an exemplary embodiment of the present disclosure, the cleaning device is provided with the detection component capable of detecting the case in the vicinity of the position where the cleaning device is located. The positioning planning module 1002 may identify the case in the vicinity of the position where the cleaning device is located by the detection component, i.e., identify whether the first cleaning target exists in the vicinity of the cleaning device.

Further, when the positioning planning module 1002 determines to identify that no first cleaning target exists in the region having the predetermined distance from the cleaning device, the positioning planning module 1002 determines that the step of determining the target cleaning region based on the semantic map may be performed.

In an exemplary embodiment of the present disclosure, in response to the positioning planning module 1002 identifies that no first cleaning target exists in the region having the predetermined distance from the cleaning device, it indicates that the cleaning intention of the user is not stain or garbage in the vicinity of the cleaning device. At this time, the positioning planning module 1002 may perform the step of analyzing that a specific cleaning intention of the user is to clean the predetermined type of room, to clean the vicinity of the second cleaning target, or to clean the region near the cleaning device based on the semantic map.

In this embodiment, before performing the step of determining the target cleaning region of the cleaning device based on the semantic map, the positioning planning module 1002 also needs a step of identifying whether the first target cleaning region exists in the region having the predetermined distance from the cleaning device. In this way, the cleaning intention of the user can be determined more accurately, and a more accurate target cleaning region can be further determined. Therefore, the cleaning region of the cleaning device can be made more in line with the user's requirements, the cleaning efficiency of the cleaning device is improved, and the experience effect of the user is improved.

In this embodiment, the first cleaning module 1004 controls the cleaning device to clean the target cleaning region by using the cleaning scheme of cleaning first along edges and then in a zigzag manner. In this way, the cleaning of the target cleaning region is ensured, which can achieve the required cleaning effect and improve the user's satisfaction degree.

In the above-described embodiments, the first cleaning module 1004 is further configured to prompt a cleaning scheme of the cleaning device on the target cleaning region via voice.

In this embodiment, before controlling the cleaning device to clean the target cleaning region, the first cleaning module 1004 further needs to play voice prompt information to remind the user about a scheme that the first cleaning module 1004 controls the cleaning device to clean the target cleaning region.

In an exemplary embodiment of the present disclosure, before the cleaning device cleans the target cleaning region, the first cleaning module 1004 plays the voice prompt information, enabling the user to know the to-be-cleaned region. For example, in response to the to-be-cleaned region by the cleaning device being the region where the teapoy is located, the first cleaning module 1004 plays the voice prompt information that "the region under the teapoy is about to be cleaned". In this way, the user can determine whether the to-be-cleaned region by the cleaning device is the region desired by the user.

In this embodiment, before controlling the cleaning device to clean the target cleaning region, the first cleaning module 1004 also plays the voice prompt information of the to-be-cleaned region. In this way, the user can determine whether the to-be-cleaned region by the cleaning device is the region desired by the user. Moreover, the cleaning region of the cleaning device can be adjusted timely when the cleaning region played by the voice prompt information is not the region that the user wants to clean.

Based on the same technical concept, the trajectory planning module 1003 of the cleaning apparatus according to the embodiments of the present disclosure is configured to: determine a current cleaning state of a mopping rag, and a start point and an end point that correspond to the path planning instruction in response to the path planning instruction; and determine a cleaning trajectory from the start point to the end point based on a geographical live map, a cleaning live map, and the cleaning state.

In a possible implementation, the trajectory planning module 1003 is specifically configured to: determine that the current cleaning state of the mopping rag is clean in response to a current cleaning stage of the cleaning device being a departure stage after self-cleaning at a water station; and determine that the current cleaning state of the mopping rag is dirty in response to the current cleaning stage of the cleaning device being a stage from a currently cleaned region to a to-be-cleaned region or a stage of returning to the water station for cleaning the mopping rag.

In a possible implementation, the trajectory planning module 1003 is specifically configured to: determine a region free of obstacles based on the geographical live map; and determine the cleaning trajectory from the start point to the end point based on the region free of obstacles and the cleaning live map in accordance with a predetermined passing strategy corresponding to the cleaning state.

In a possible implementation, said determining the cleaning trajectory from the start point to the end point based on the region free of obstacles and the cleaning live map in accordance with the predetermined passing strategy corresponding to the cleaning state comprises: determining a currently cleaned region from the cleaning live map in response to the cleaning state being clean; determining all cleaned regions free of obstacles between the start point and the end point based on the region free of obstacles and the currently cleaned region; and determining at least one continuous movement trajectory formed between the start point, all the cleaned regions free of obstacles, and the end point, and determining a shortest movement trajectory from the at least one movement trajectory as the cleaning trajectory from the start point to the end point.

In a possible implementation, said determining the cleaning trajectory from the start point to the end point based on the region free of obstacles and the cleaning live map in accordance with the predetermined passing strategy corresponding to the cleaning state comprises: determining all to-be-cleaned regions from the cleaning live map in response to the cleaning state being dirty; determining all to-be-cleaned regions free of obstacles between the start point and the end point based on the region free of obstacles and all the to-be-cleaned regions; and determining at least one continuous movement trajectory formed between the start point, all the to-be-cleaned regions free of obstacles, and the end point, and determining a shortest movement trajectory from the at least one movement trajectory as the cleaning trajectory from the start point to the end point.

In a possible implementation, the trajectory planning module 1003 is further configured to: determine that no continuous movement trajectory is formed, and determine the cleaning trajectory from the start point to the end point based on the region free of obstacles.

In a possible implementation, the cleaning apparatus further comprises a division module configured to: divide the target cleaning region into a plurality of regions, and determine a cleaning sequence of the plurality of regions.

In a possible implementation, the division module is specifically configured to determine the start point and the end point that correspond to the path planning instruction based on a current cleaning stage of the cleaning device and the cleaning sequence of the plurality of regions.

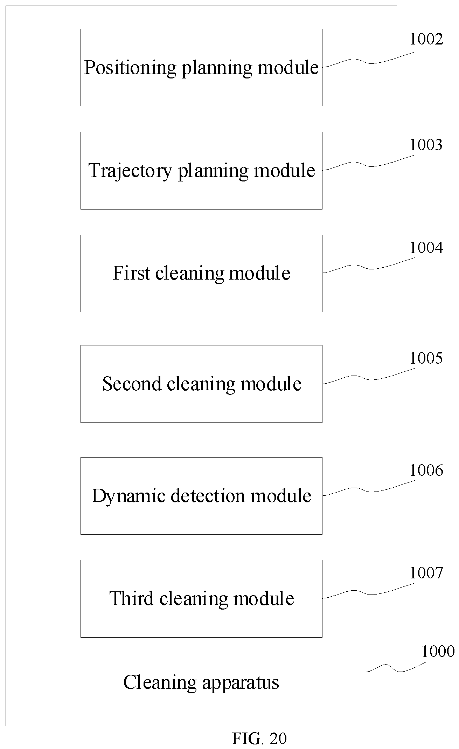

Referring to FIG. 20, a cleaning apparatus according to the embodiments of the present disclosure further comprises: a second cleaning module 1005 configured to mark an obstacle in the target cleaning region and perform the cleaning action with avoiding the obstacle in the target cleaning region; a dynamic detection module 1006 configured to detect a state of the obstacle in the target cleaning region and determine an obstacle with a changed state; and a third cleaning module 1007 configured to perform the cleaning action at a position of the obstacle with the changed state.

With the cleaning apparatus according to the embodiments of the present disclosure, the positioning planning module 301 first determines the target cleaning region needing to be cleaned, and the second cleaning module 1005 is capable of performing the cleaning action within the target cleaning region while avoiding and marking the obstacle. The dynamic detection module 1006 is capable of detecting the movable obstacle in the target cleaning region, and determining a change of the state of the dynamic obstacle when cases of a movable object, movement of the object by the user, and opening and closing of the door exist in the scene. The third cleaning module 1007 is configured to cause an execution subject to move to a position of the obstacle with the changed state to perform the cleaning action. In this way, the missed sweeping caused by the movement of the object is avoided, and the coverage rate of the automatic cleaning in the dynamic scene is improved.

It can be understood that, in the second cleaning module 1005, marking the obstacle in the target cleaning region comprises marking a position, a type, and a shape of the obstacle in the target cleaning region.

It needs to be noted that in order for the cleaning apparatus according to the embodiments of the present disclosure to be realized, the cleaning device at least needs to be configured with an RGB camera, a laser radar, a high-performance GPU, an Al chip and a memory. For example, a high-definition camera is mounted at every 90-degree angle at an edge part of the cleaning device for capturing real-time visual scenes. A high-performance GPU is mounted inside the cleaning device for feature extraction and image identification of visual scene images captured in real time. The Al chip is mounted inside the high-performance GPU, and the target identification algorithm is integrated inside the chip. The memory is mounted inside the cleaning device for storing the target cleaning region map and the obstacle set.

The GPU may realize functions of obstacle state management, Al identification, and navigation planning.

In an exemplary embodiment of the present disclosure, the RGB camera may identify low-lying obstacles such as socks, wires, and the like, and the laser radar may identify tall obstacles such as furniture, trash cans, and the like.

It can be understood that in the dynamic detection module 1006, detecting the state of the obstacle in the target cleaning region, and determining the obstacle with the changed state comprises: detecting a position and a shape of the dynamic obstacle in the target cleaning region; and determining a dynamic obstacle with a changed state based on the dynamic obstacle having a changed position or a changed shape.

It can be understood that the cleaning action comprises the first cleaning action and the second cleaning action. The first cleaning trajectory determined by performing the first cleaning action is the closed loop, and the second cleaning trajectory determined by performing the second cleaning action is used to traverse the closed loop.

It can be understood that, in the positioning planning module 301, determining the target cleaning region comprises: performing the first cleaning action, and determining the target cleaning region based on a cleaning trajectory of the first cleaning action.

It can be understood that, in the third cleaning module 1007, performing the cleaning action with avoiding the obstacle in the target cleaning region comprises: performing the second cleaning action in the target cleaning region; and determining that the obstacle is encountered, performing the first cleaning action with avoiding the obstacle and continuing to perform the second cleaning action subsequent to performing the first cleaning action with avoiding the obstacle.

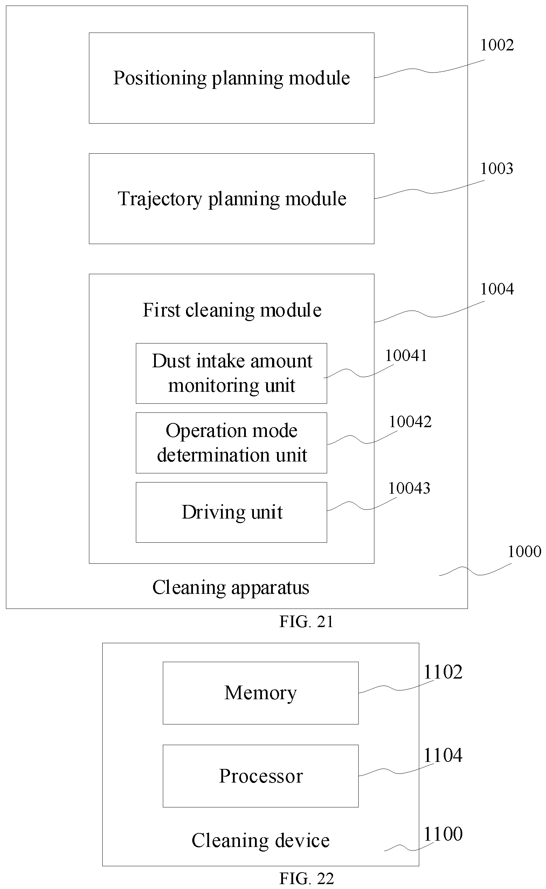

In another implementation of the present disclosure, as shown in FIG. 21, the first cleaning module 1004 of the present disclosure further comprises: a dust intake amount monitoring unit 10041 configured to monitor the dust intake amount of dust entering the dust collection box in the cleaning device; an operation mode determination unit 10042 configured to determine the target operation mode of the cleaning device based on the relation between the dust intake amount and the predetermined dust amount threshold; and a driving unit 10043 configured to drive the cleaning device to operate in the target operation mode. The target operation mode is used to change the cleaning strength and the cleaning area of the cleaning device.

In the present disclosure, the dust intake amount of the dust collection box in the cleaning device is monitored. The target operation mode of the cleaning device is determined based on the relation between the dust intake amount and the predetermined dust amount threshold. The target operation mode is used to change the cleaning strength and the cleaning area of the cleaning device. The cleaning device is driven to operate in the target operation mode. By applying the technical solutions of the present disclosure, the cleaning strength and the cleaning area of the cleaning device may be adjusted correspondingly according to the detected dust intake amount of the dust collection box of the cleaning device. Therefore, it is realized that the robot is operated by cleaning at a high strength in the dirty region, and that the robot is operated by cleaning at a low strength in the normal region. Further, not only can the cleaning effect for the dirty region be guaranteed, but the problem, which exists in the related art, of not high cleaning efficiency for the specific region caused by always performing cleaning with the same cleaning strength and the same cleaning area is also avoided.

In another implementation of the present disclosure, the operation mode determination unit 10042 is configured to: determine, in response to detecting that the dust intake amount is greater than the predetermined dust amount threshold, the target operation mode for controlling the cleaning device to perform a cleaning function with a first cleaning strength and a first cleaning area; or determine, in response to detecting that the dust intake amount is smaller than or equal to the predetermined dust amount threshold, the target operation mode for controlling the cleaning device to perform the cleaning function with a second cleaning strength and a second cleaning area. The second cleaning strength is lower than the first cleaning strength, and the second cleaning area is smaller than the first cleaning area.

In another implementation of the present disclosure, the operation mode determination unit 10042 is configured to: determine that the dust intake amount is greater than the predetermined dust amount threshold, and record a position where the cleaning device is located; and mark a region within a predetermined range from the position as a high cleaning region, and control the cleaning device to perform the cleaning function with the first cleaning strength and the first cleaning area in the high cleaning region.

In another implementation of the present disclosure, the operation mode determination unit 10042 is configured to: determine at least one of a rotational speed of a dust absorption motor, a traveling interval, a cleaning area, and a number of repeated cleaning times that are represented by the target operation mode; and drive the cleaning device to perform a cleaning function with the at least one of the rotational speed of the dust absorption motor, the traveling interval, the cleaning area, and the number of repeated cleaning times. The traveling interval reflects a distance between two adjacent traveling routes of the cleaning device.

In another implementation of the present disclosure, the operation mode determination unit 10042 is configured to: determine an initial interval between two adjacent current traveling routes of the cleaning device; adjust the initial interval to a target interval; and drive the cleaning device to perform the cleaning function with a distance between two adjacent traveling routes being the target interval. The target interval is smaller than the initial interval.

In another implementation of the present disclosure, the operation mode determination unit 10042 is configured to: activate, in response to detecting that the dust intake amount is greater than the predetermined dust amount threshold, a camera apparatus of the cleaning device; collect a region image in a traveling direction of the cleaning device by using the camera device; and determine the target operation mode of the cleaning device based on an identification result of the region image and the relation between the dust intake amount and the predetermined dust amount threshold.

In another implementation of the present disclosure, the operation mode determination unit 10042 is configured to identify a region object feature in the region image by using a predetermined image detection model, and determine the identification result of the region image based on the region object feature. The region object feature comprises at least one of a size feature, a color feature, or a contour feature. The identification result reflects a to-be-cleaned object in a region where the cleaning device is currently located.

In another implementation of the present disclosure, the dust intake amount monitoring unit 10041 is configured to monitor a dust intake amount at an inlet of the dust collection box within a predetermined time period, or monitor a weight change condition of the dust collection box within a predetermined time period.

FIG. 22 is a block diagram of a logic structure of a cleaning device illustrated according to an exemplary embodiment. For example, the cleaning device 1100 may be a cleaning device having a drying function, such as a clothes dryer or a washing machine.

The cleaning device comprises a memory 1102 having a program or instruction stored therein and a processor 1104. The processor 1104 executes the program or instruction stored in the memory 1102 to implement the steps of the cleaning method according to the above-described embodiments of the present disclosure. Therefore, the device has all the beneficial technical effects of the cleaning method according to the above-described embodiments of the present disclosure, and details are omitted herein.

The present disclosure provides a readable storage medium having a program or instruction stored thereon. The program or instruction, when executed by a processor, implements the cleaning method according to the embodiments of the present disclosure described above. Therefore, the readable storage medium has all the beneficial effects of the cleaning method proposed in the above-described embodiments of the present disclosure, and details are omitted herein.

In another exemplary embodiment of the present disclosure, the above-described instructions may also be executed by the processor of the cleaning device, to complete other steps involved in the above-described exemplary embodiments. For example, a readable storage medium of a non-transitory computing device may be a ROM, a random access memory (RAM), a CD-ROM, a magnetic tape, a floppy disk, an optical data storage device, and the like.

## Claims

1. A cleaning method applied in a cleaning device, the cleaning method comprising:
determining a target cleaning region;
generating a cleaning trajectory in the target cleaning region in response to a path planning instruction; and
performing a cleaning action along the cleaning trajectory.

2. The cleaning method according to claim 1, wherein said determining the target cleaning region comprises:
determining a target cleaning region of the cleaning device in response to identifying that the cleaning device is activated at a non-charging position.

3. The cleaning method according to claim 2, wherein said determining the target cleaning region of the cleaning device comprises:
identifying whether a first cleaning target exists in a region having a predetermined distance from the cleaning device, and determining a region where the first cleaning target is located as the target cleaning region in response to the first cleaning target existing in the region having the predetermined distance from the cleaning device.

4. The cleaning method according to claim 2, wherein said determining the target cleaning region of the cleaning device comprises:
obtaining a semantic map of all scenes established by the cleaning device; and
determining the target cleaning region based on the semantic map.

5. The cleaning method according to claim 4, wherein said determining the target cleaning region based on the semantic map comprises:
determining, in response to determining that the cleaning device is in a predetermined type of room based on the semantic map, the predetermined type of room as the target cleaning region.

6. The cleaning method according to claim 4, wherein said determining the target cleaning region based on the semantic map comprises:
determining, in response to determining that the cleaning device is not in a predetermined type of room and that a second cleaning target exists in a region having a predetermined distance from the cleaning device based on the semantic map, the region where the second cleaning target is located as the target cleaning region.

7. The cleaning method according to claim 4, wherein said determining the target cleaning region based on the semantic map comprises:
determining, in response to determining that the cleaning device is not in a predetermined type of room and that no second cleaning target exists in a region having a predetermined distance from the cleaning device based on the semantic map, the region having the predetermined distance from the cleaning device as the target cleaning region.

8. The cleaning method according to claim 4, further comprising, prior to determining the target cleaning region based on the semantic map:
identifying whether a first cleaning target exists in a region having a predetermined distance from the cleaning device, and determining to perform the step of determining the target cleaning region based on the semantic map in response to the first cleaning target not existing in the region having the predetermined distance from the cleaning device.

9. The cleaning method according to any one of claims 1 to 8, wherein said performing the cleaning action along the cleaning trajectory comprises:
cleaning the target cleaning region by using a cleaning scheme of cleaning first along an edge and then in a zigzag manner, and returning to a charging position for charging upon completion.

10. The cleaning method according to any one of claims 1 to 8, further comprising, prior to performing the cleaning action along the cleaning trajectory:
prompting a cleaning scheme of the cleaning device on the target cleaning region via voice.

11. The cleaning method according to claim 3 or 8, wherein the first cleaning target comprises any one of a stain, small granular garbage, or flocculent garbage.

12. The cleaning method according to claim 6 or 7, wherein the second cleaning target is a household appliance or furniture.

13. The cleaning method according to claim 1, wherein said generating the cleaning trajectory in the target cleaning region in response to the path planning instruction comprises:
determining a current cleaning state of a mopping rag, and a start point and an end point that correspond to the path planning instruction in response to the path planning instruction; and
determining a cleaning trajectory from the start point to the end point based on a geographical live map, a cleaning live map, and the cleaning state.

14. The cleaning method according to claim 13, wherein said determining the current cleaning state of the mopping rag comprises:
determining that the current cleaning state of the mopping rag is clean in response to a current cleaning stage of the cleaning device being a departure stage after self-cleaning at a water station; and
determining that the current cleaning state of the mopping rag is dirty in response to the current cleaning stage of the cleaning device being a stage from a currently cleaned region to a to-be-cleaned region or a stage of returning to the water station for cleaning the mopping rag.

15. The cleaning method according to claim 13, wherein said determining the cleaning trajectory from the start point to the end point based on the geographical live map, the cleaning live map, and the cleaning state comprises:
determining a region free of obstacles based on the geographical live map; and
determining the cleaning trajectory from the start point to the end point based on the region free of obstacles and the cleaning live map in accordance with a predetermined passing strategy corresponding to the cleaning state.

16. The cleaning method according to claim 15, wherein said determining the cleaning trajectory from the start point to the end point based on the region free of obstacles and the cleaning live map in accordance with the predetermined passing strategy corresponding to the cleaning state comprises:
determining a currently cleaned region from the cleaning live map in response to the cleaning state being clean;
determining all cleaned and free of obstacles regions between the start point and the end point based on the region free of obstacles and the currently cleaned region; and
determining at least one continuous movement trajectory formed between the start point, all the cleaned and free of obstacles regions, and the end point, and determining a shortest movement trajectory from the at least one movement trajectory as the cleaning trajectory from the start point to the end point.

17. The cleaning method according to claim 15, wherein said determining the cleaning trajectory from the start point to the end point based on the region free of obstacles and the cleaning live map in accordance with the predetermined passing strategy corresponding to the cleaning state comprises:
determining all to-be-cleaned regions from the cleaning live map in response to the cleaning state being dirty;
determining all to-be-cleaned and free of obstacles regions between the start point and the end point based on the region free of obstacles and all the to-be-cleaned regions; and
determining at least one continuous movement trajectory formed between the start point, all the to-be-cleaned and free of obstacles regions, and the end point, and determining a shortest movement trajectory from the at least one movement trajectory as the cleaning trajectory from the start point to the end point.

18. The cleaning method according to claim 16 or 17, further comprising:
determining that no continuous movement trajectory is formed, and determining the cleaning trajectory from the start point to the end point based on the region free of obstacles.

19. The cleaning method according to any one of claims 13 to 17, further comprising, prior to in response to the path planning instruction:
dividing the target cleaning region into a plurality of regions, and determining a cleaning sequence of the plurality of regions.

20. The cleaning method according to claim 19, wherein said determining the start point and the end point that correspond to the path planning instruction comprises:
determining the start point and the end point that correspond to the path planning instruction based on the current cleaning stage of the cleaning device and the cleaning sequence of the plurality of regions.

21. The cleaning method according to claim 1, further comprising:
marking an obstacle in the target cleaning region, and performing the cleaning action with avoiding the obstacle in the target cleaning region;
detecting a state of the obstacle in the target cleaning region, and determining an obstacle with a changed state; and
performing the cleaning action at a position of the obstacle with the changed state.

22. The cleaning method according to claim 21, wherein said marking the obstacle in the target cleaning region comprises:
marking a position, a type, and a shape of the obstacle in the target cleaning region, the type comprising a dynamic obstacle.

23. The cleaning method according to claim 22, wherein said detecting the state of the obstacle in the target cleaning region, and determining the obstacle with the changed state comprises:
detecting a position and a shape of the dynamic obstacle in the target cleaning region; and
determining a dynamic obstacle with a changed state based on the dynamic obstacle having a changed position or a changed shape.

24. The cleaning method according to any one of claims 21 to 23, wherein the cleaning action comprises a first cleaning action and a second cleaning action, wherein a first cleaning trajectory determined by performing the first cleaning action is a closed loop, and a second cleaning trajectory determined by performing the second cleaning action is capable of filling the target cleaning region.

25. The cleaning method according to claim 24, wherein said determining the target cleaning region comprises:
performing the first cleaning action, and determining the target cleaning region based on a cleaning trajectory of the first cleaning action.

26. The cleaning method according to claim 24, wherein said performing the cleaning action with avoiding the obstacle in the target cleaning region comprises:
performing the second cleaning action in the target cleaning region; and
determining that the obstacle is encountered, performing the first cleaning action with avoiding the obstacle and then continuing to perform the second cleaning action.

27. The cleaning method according to claim 1, wherein said performing the cleaning action along the cleaning trajectory comprises:
monitoring a dust intake amount of a dust collection box in the cleaning device;
determining a target operation mode of the cleaning device based on a relation between the dust intake amount and a predetermined dust amount threshold, wherein the target operation mode is used to change a cleaning strength and a cleaning area of the cleaning device; and
driving the cleaning device to operate in the target operation mode for performing the cleaning action.

28. The cleaning method according to claim 27, wherein said determining the target operation mode of the cleaning device based on the relation between the dust intake amount and the predetermined dust amount threshold comprises:
determining, in response to detecting that the dust intake amount is greater than the predetermined dust amount threshold, the target operation mode for controlling the cleaning device to perform a cleaning function with a first cleaning strength and a first cleaning area; or
determining, in response to detecting that the dust intake amount is smaller than or equal to the predetermined dust amount threshold, the target operation mode for controlling the cleaning device to perform a cleaning function with a second cleaning strength and a second cleaning area, wherein the second cleaning strength is lower than the first cleaning strength, and the second cleaning area is smaller than the first cleaning area.

29. The cleaning method according to claim 28, wherein said determining, in response to detecting that the dust intake amount is greater than the predetermined dust amount threshold, the target operation mode for controlling the cleaning device to perform the cleaning function with the first cleaning strength and the first cleaning area further comprises:
determining that the dust intake amount is greater than the predetermined dust amount threshold, and recording a position where the cleaning device is located; and
marking a region within a predetermined range from the position as a high cleaning region, and controlling the cleaning device to perform the cleaning function with the first cleaning strength and the first cleaning area in the high cleaning region.

30. The cleaning method according to claim 27 or 28, wherein said driving the cleaning device to operate in the target operation mode comprises:
determining at least one of a rotational speed of a dust absorption motor, a traveling interval, a cleaning area, and a number of repeated cleaning times that are represented by the target operation mode; and
driving the cleaning device to perform a cleaning function with the at least one of the rotational speed of the dust absorption motor, the traveling interval, the cleaning area, and the number of repeated cleaning times, the traveling interval reflecting a distance between two adjacent traveling routes of the cleaning device.

31. The cleaning method according to claim 30, wherein said driving the cleaning device to perform the cleaning function with the traveling interval comprises:
determining an initial interval between two adjacent current traveling routes of the cleaning device;
adjusting the initial interval to a target interval, the target interval being smaller than the initial interval; and
driving the cleaning device to perform the cleaning function with the distance between two adjacent traveling routes being the target interval.

32. The cleaning method according to claim 27, wherein said determining the target operation mode of the cleaning device based on the relation between the dust intake amount and the predetermined dust amount threshold comprises:
activating, in response to detecting that the dust intake amount is greater than the predetermined dust amount threshold, a camera apparatus of the cleaning device;
collecting a region image in a traveling direction of the cleaning device by using the camera device; and
determining the target operation mode of the cleaning device based on an identification result of the region image and the relation between the dust intake amount and the predetermined dust amount threshold.

33. The cleaning method according to claim 32, further comprising, subsequent to collecting the region image in the traveling direction of the cleaning device by using the camera apparatus:
identifying a region object feature in the region image by using a predetermined image detection model, the region object feature comprising at least one of a size feature, a color feature, or a contour feature; and
determining the identification result of the region image based on the region object feature, wherein the identification result reflects a to-be-cleaned object in a region where the cleaning device is currently located.

34. The cleaning method according to claim 27, wherein said monitoring the dust intake amount of the dust collection box in the cleaning device comprises:
monitoring a dust intake amount at an inlet of the dust collection box within a predetermined time period; or
monitoring a weight change condition of the dust collection box within a predetermined time period.

35. A cleaning apparatus, comprising:
a positioning planning module configured to determine a target cleaning region;
a trajectory planning module configured to generate a cleaning trajectory in the target cleaning region in response to a path planning instruction; and
a cleaning module configured to perform a cleaning action along the cleaning trajectory.

36. A cleaning device, comprising:
a memory;
a processor; and
a computer program stored in the memory and executable on the processor, wherein the processor, when executing the program, implements the cleaning method according to any one of claims 1 to 34.

37. A computer-readable storage medium, having a computer program stored thereon, wherein the computer program, when executed by a processor, implements the cleaning method according to any one of claims 1 to 34.
